# EUROPEAN PATENT APPLICATION

(11) **EP 1 610 228 A1**
(43) Date of publication of application: **28.12.2005**
(21) Application number: 04708919.8
(22) Date of filing: 06.02.2004
(51) Int. Cl.: G06F 17/21

(54) **DATA CONVERSION METHOD CAPABLE OF OPTIMALLY PERFORMING MARK-UP LANGUAGE PROCESSING**

(30) Priority: 07.03.2003 JP 2003061757
(71) Applicant: SHARP KABUSHIKI KAISHA, Osaka-shi, Osaka-fu 545-0013 (JP)
(72) Inventor: KAGECHI, Kensaku, Nara-shi, Nara 631-0023 (JP); IWASAKI, Keisuke, 6360154 (JP); SAIGA, Hisashi, Nara-shi, Nara 630-8305 (JP); SAWADA, Yuji;, ra-shi, Nara;6308303 (JP); MITSUTOMI, Tomoo;, hi, Nara;6320004 (JP); KADOWAKI, Motohiro;, Soraku-gun, Kyoto 619-0215 (JP)
(74) Representative: Müller, Frithjof E.
(86) International application number: PCT/JP2004/001300
(87) International publication number: WO 2004/079586

(57) **Abstract**

A converter (0102) extracts, from description tag data described in a markup language, a character string representing a tag name, a character string representing an attribute, and a character string representing an attribute value included in the description tag data for conversion into other character string shorter than that character string. A viewer (0104) obtains conversion tag data, which is converted tag data, having an amount of data smaller than that of the original description tag data, and creates display data based on the conversion tag data in a viewer body (0105) for display on a display device (0106).

## Description

### Technical Field

The present invention relates to a data conversion method, a data display method, a data conversion device, and a data display device, and more particularly to a data conversion method, a data display method, a data conversion device, and a data display device allowing a markup language to be processed optimally.

### Background Art

A markup language is now receiving attention as a scheme to represent a document by inserting a variety of functional information into text in a predetermined format.

Such a markup language employs various forms, and various applications using these forms are implemented and used in various equipment mainly including information equipment such as personal computers, mobile phones, and PDA (Personal Digital Assistants). The markup language usually uses a tag for use in control having a name with which its function can easily be associated.

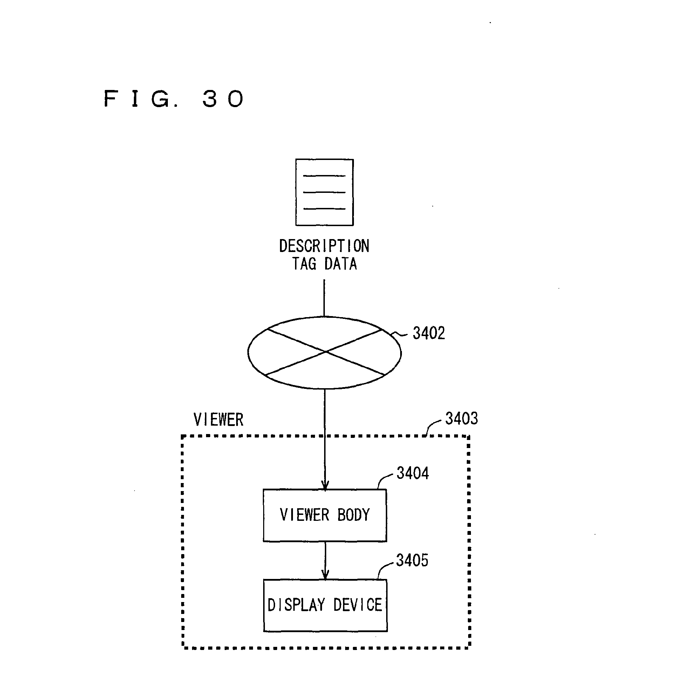

Today, systems using data in the tag form such as markup languages, including websites over the Internet, are generally configured as shown in Fig. 30. More specifically, such a system receives original document data (referred to as description tag data hereinafter) described in a markup language through a network 3402 and the like and transmits the same to a viewer 3403.

Viewer 3403 is configured to include a viewer body 3404 and a display device 3405, and viewer body 3404 receives description tag data and outputs display data to a display device 3405.

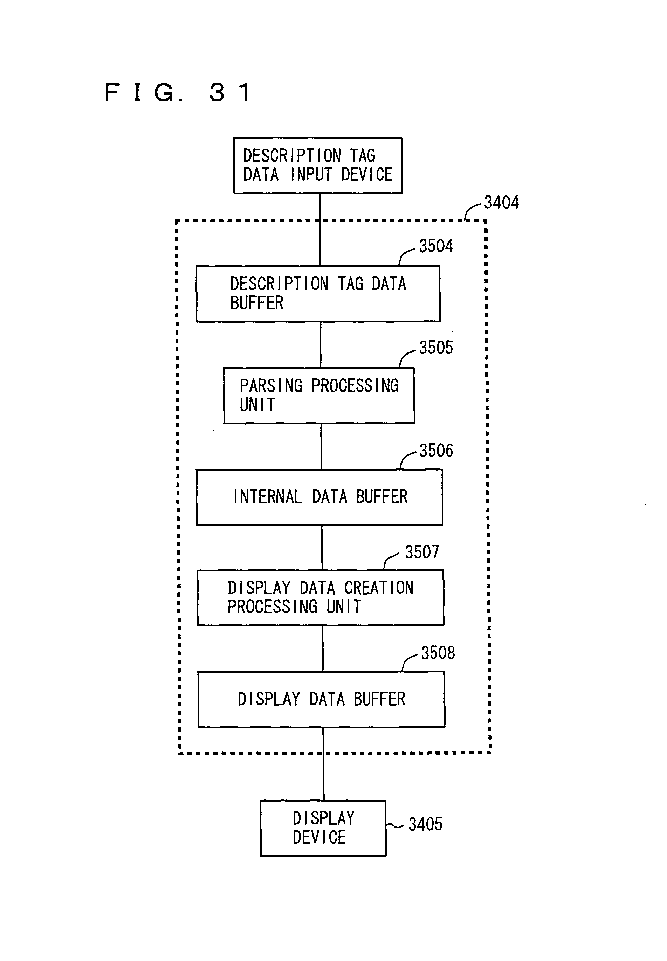

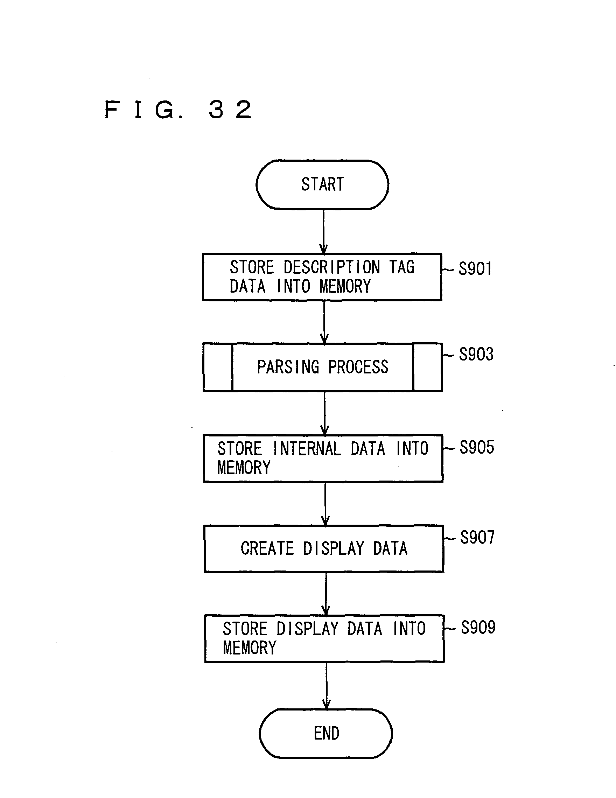

In addition, viewer body 3404 is configured, as shown in Fig. 31, to include a description tag data buffer 3504 storing description tag data, a parsing processing unit 3505 performing parsing (analysis) for creating display data from description tag data, an internal data buffer 3506 storing internal data, a display data creation processing unit 3507 creating display data, and a display data buffer 3508 storing display data, and executes processing as shown in Fig. 32.

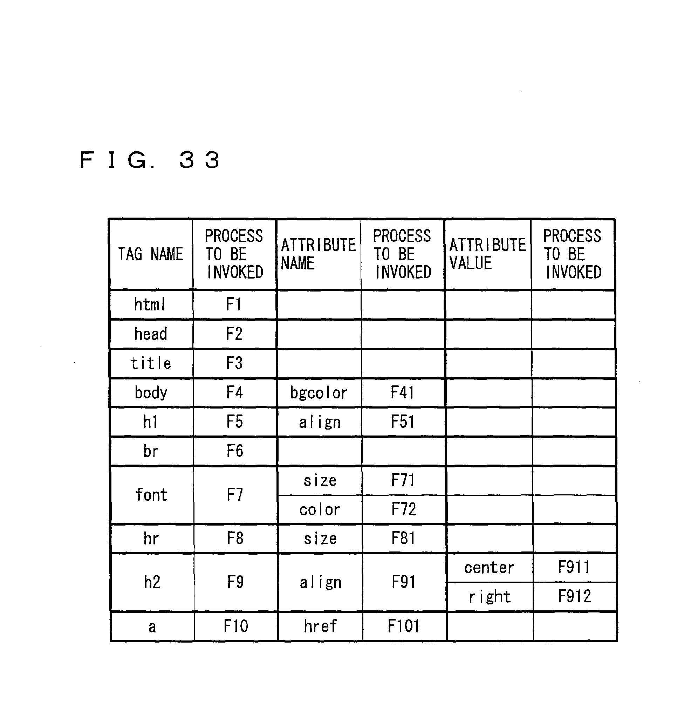

Referring to Fig. 32, at viewer body 3404, the input description tag data is stored into description tag data buffer 3504 (S901), and, at parsing processing unit 3505, a parsing process for creating display data from the description tag data is performed (S903). Here, an analysis for creating display data from description tag data is performed by switching processes to be executed according to a tag name given to a tag, an attribute name given together with the tag name, and an attribute value corresponding to the attribute name included in the description tag data. For example, as shown in Fig. 33, an analysis process for description tag data is performed by executing a process F 1 corresponding to an html tag. Furthermore, an analysis process for description tag data is performed by executing a process F4 corresponding to a body tag and, if an attribute "bgcolor" is included in the body tag, by executing a process F41 corresponding that attribute. Furthermore, an analysis process for description tag data is performed by executing a process F9 corresponding to an h2 tag, if an attribute "align" is included in the h2 tag, by executing a process F91 corresponding to that attribute, and, if its attribute value is "center", by further executing a process F911 corresponding to that attribute value.

Then, a parsing (analysis) result for creating such display data is stored as internal data in internal data buffer 3506 (S905).

Next, display data is created at display data creation processing unit 3507 based on the internal data (S907), and the created display data is stored in display data buffer 3508 (S909) and output to display device 3405.

The markup language is advantageous in that human beings can use a text editor to easily create and change contents data since tags for use in control are used with names with which their functions can easily be associated as described above. On the other hand, however, tag names are redundant in data. Therefore, there are two problems as follows.
(1) The amount of data is large. (In particular, due to recent complication of contents, the frequency of using control tags tends to increase and the redundancy of data tends to grow accordingly.)
(2) The amount of processing required to access data is large. (The markup language is based on tags as described above to access data. Therefore, a process of searching for a tag is frequently performed during data access. Since a tag is formed of a character length greater than required, the character length to be searched is great, thereby resulting in a large amount of processing.)

These two problems hinder a comfortable use particularly in portable equipment with a small data storage capacity and with a low processing ability.

As a technique for solving the aforementioned problem of a large amount of data, Japanese Patent Laying-Open No. 2000-76155 discloses an HTML document compression, expansion and display method for compressing data expressed in HTML (Hyper Text Markup Language) that is one of markup languages. Japanese Patent Laying-Open No. 2000-76155 discloses an HTML document compression method in which a new tag called <compress> is introduced into HTML language, and data is compressed in an arbitrary compression scheme and arranged between a <compress> tag and a </compress> tag, thereby decreasing redundancy of the overall data and reducing the amount of data.

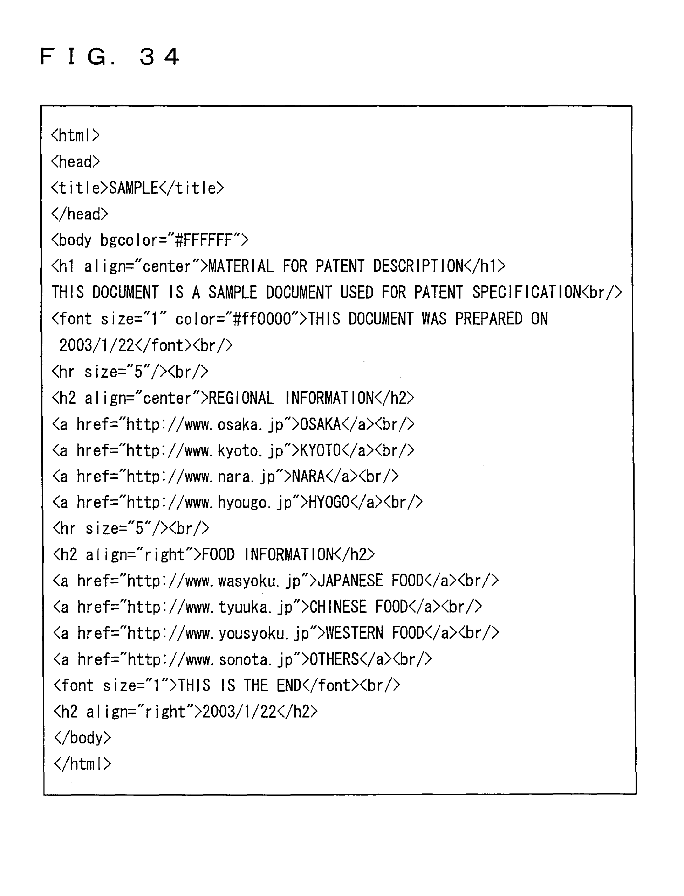

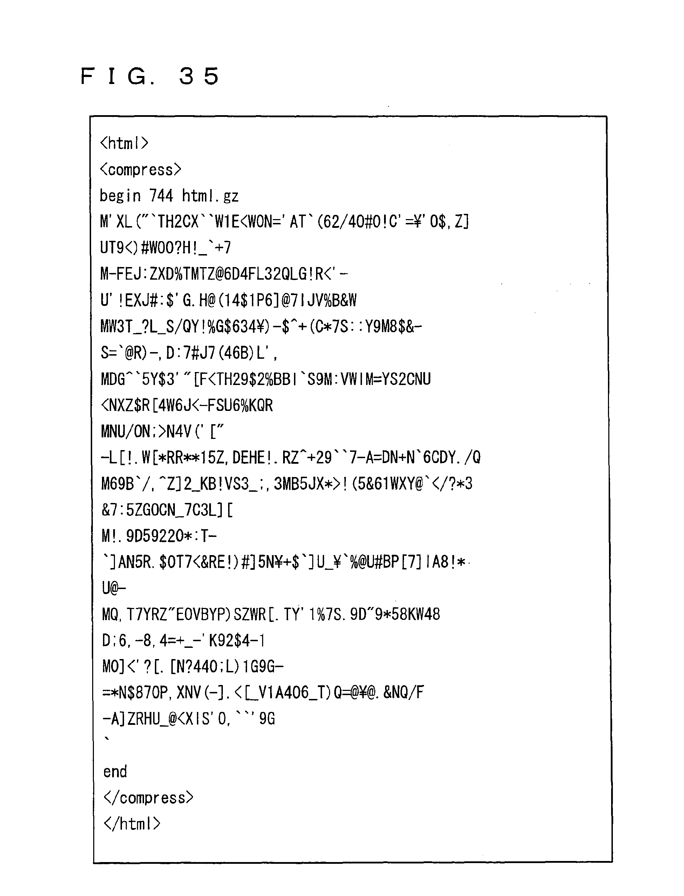

With the use of the technology as shown in Japanese Patent Laying-Open No. 2000-76155, for example, the original document data as shown in Fig. 34 (referred to as description tag data hereinafter) is converted into compression tag data shown in Fig. 35 after being compressed.

Furthermore, the technique disclosed in Japanese Patent Laying-Open No. 2002-312278 includes a technique for converting a tag to be adapted for an HTML document in a different format.

However, although the use of the technique disclosed in Japanese Patent Laying-Open No. 2000-76155 improves the efficiency of data storage and transfer by reducing the amount of data, it has the following problem: since data is in a compressed form between the <compress> tag and the </compress> tag as shown in Fig. 35, the contents of the original description tag data cannot be obtained without performing a decoding process in this portion. In other words, a decoding process is always added during viewing, and inevitably, the amount of processing significantly increases.

Therefore, although the use of the technique disclosed in Japanese Patent Laying-Open No. 2000-76155 solves the first problem, that is, a large amount of data, the second problem, that is, a large amount of processing required to access data, is exacerbated by the amount of decoding processes, on the contrary.

A keyword search is often used to retrieve contents including specific information from a plurality of contents. When contents are compressed using the technique disclosed in Japanese Patent Laying-Open No. 2000-76155, a decoding process is needed also in retrieving contents, thereby significantly increasing a search time. In addition, unfortunately, a general-purpose text search program cannot be used.

Additionally, the tag conversion disclosed in Japanese Patent Laying-Open No. 2002-312278 is only a substitution into a format that can be interpreted by a viewer and thus does not lead to a reduced amount of data and a decreased amount of processing.

The present invention is made in view of these problems and aims to provide a data conversion method, a data display method, a data conversion device, and a data display device allowing a markup language to be processed optimally while realizing both a reduced amount of data and a decreased amount of processing required for data access.

### Disclosure of the Invention

In order to achieve the above-described aims, in accordance with an aspect of the present invention, a data conversion method includes: an extraction step of extracting, from first data described in a markup language, at least one character string of a character string representing a tag name, a character string representing an attribute name, and a character string representing an attribute value included in the first data; and a generation step of generating second data by converting a character string extracted from the first data into other character string having an amount of data smaller than that of the extracted character string.

In accordance with another aspect of the present invention, a data display method includes: an obtaining step of obtaining second data generated by converting at least one character string of a character string representing a tag name, a character string representing an attribute name, and a character string representing an attribute value included in first data described in a markup language, into other character string; and an analysis step of performing an analysis for displaying the first data by executing an analysis process corresponding to the converted other character string included in the second data.

In accordance with a further aspect of the present invention, a data conversion device includes: an extraction unit extracting, from first data described in a markup language, at least one character string of a character string representing a tag name, a character string representing an attribute name, and a character string representing an attribute value included in the first data; and a generation unit generating second data by converting a character string extracted from the first data into other character string having an amount of data smaller than that of the extracted character string.

In accordance with yet another aspect of the present invention, a data display device includes: an obtaining unit obtaining second data generated by converting at least one character string of a character string representing a tag name, a character string representing an attribute name, and a character string representing an attribute value included in first data described in a markup language, into other character string; and an analysis unit performing an analysis for displaying the first data by executing an analysis process corresponding to the converted other character string included in the second data.

### Brief Description of the Drawings

Fig. 1 is a diagram showing an exemplary configuration of an electronic information display system 0101 in a first embodiment and a data flow in the system.
Fig. 2 is a diagram showing an exemplary configuration of a converter 0102.
Fig. 3 is a flowchart illustrating a flow of a process in converter 0102.
Fig. 4 is a flowchart illustrating a process of converting description tag data to be executed at step S103.
Fig. 5 is a diagram showing an exemplary tag conversion rule.
Fig. 6 is a diagram showing an exemplary tag conversion table.
Fig. 7 is a diagram showing exemplary conversion tag data.
Fig. 8 is a diagram showing an exemplary configuration of a converter 0102a in a modification.
Fig. 9 is a flowchart illustrating a flow of a process in converter 0102a.
Fig. 10 is a diagram showing an exemplary conversion tag warning message.
Fig. 11 is a flowchart illustrating a tag reverse-conversion process executed at step S313.
Fig. 12 is a diagram showing an exemplary reverse-conversion table.
Fig. 13 is a diagram showing an exemplary description tag warning message.
Fig. 14 is a diagram showing an exemplary configuration of a viewer body 0105.
Fig. 15 is a flowchart illustrating a flow of a process in viewer body 0105.
Fig. 16 is a diagram showing an exemplary correspondence between a character string after conversion included in a conversion tag data and a process executed in a parsing processing unit 1405.
Fig. 17 is a diagram showing an exemplary configuration of an electronic information display system 1701 in accordance with a second embodiment and a data flow in the system.
Fig. 18 is a diagram showing an exemplary configuration of a converter 1702.
Fig. 19 is a flowchart illustrating a flow of a process in converter 1702.
Fig. 20 is a diagram showing exemplary tag information count data.
Fig. 21 is a diagram showing an exemplary conversion rule.
Fig. 22 is a diagram showing an exemplary tag conversion table.
Fig. 23 is a diagram showing exemplary conversion tag data.
Fig. 24 is a flowchart illustrating a count process of tag-related information to be executed at step S603.
Fig. 25 is a diagram showing an exemplary configuration of an internal converter 1705.
Fig. 26 is a flowchart illustrating a flow of a process in internal converter 1705.
Fig. 27 is a diagram showing an exemplary tag conversion table for viewer.
Fig. 28 is a diagram showing an exemplary internal tag conversion table.
Fig. 29 is a diagram showing an exemplary conversion rule.
Fig. 30 is a diagram showing an exemplary configuration of a conventional electronic information display system.
Fig. 31 is a diagram showing an exemplary configuration of a conventional viewer body 3404.
Fig. 32 is a flowchart illustrating a process in the conventional viewer body 3404.
Fig. 33 is a diagram showing an exemplary correspondence between a prescribed character string included in description tag data and a process executed in a parsing processing unit 3505.
Fig. 34 is a diagram showing exemplary description tag data.
Fig. 35 is a diagram showing exemplary compression tag data.
Fig. 36 is an exemplary configuration of an electronic information display system 0101a in a modification of the first embodiment and a data flow in the system.

### Best Modes for Carrying Out the Invention

With reference to the figures, the embodiments of the present invention will be described hereinafter. In the following description, the same parts and components will be denoted with the same reference characters. Their names and functions are also the same. Therefore, the detailed description thereof will not be repeated.

### [First Embodiment]

An electronic information display system (referred to as system hereinafter) 0101 in accordance with a first embodiment is mainly characterized in that the amount of description tag data as original document data described in a markup language is reduced and the amount of processing of a viewer is also reduced during viewing.

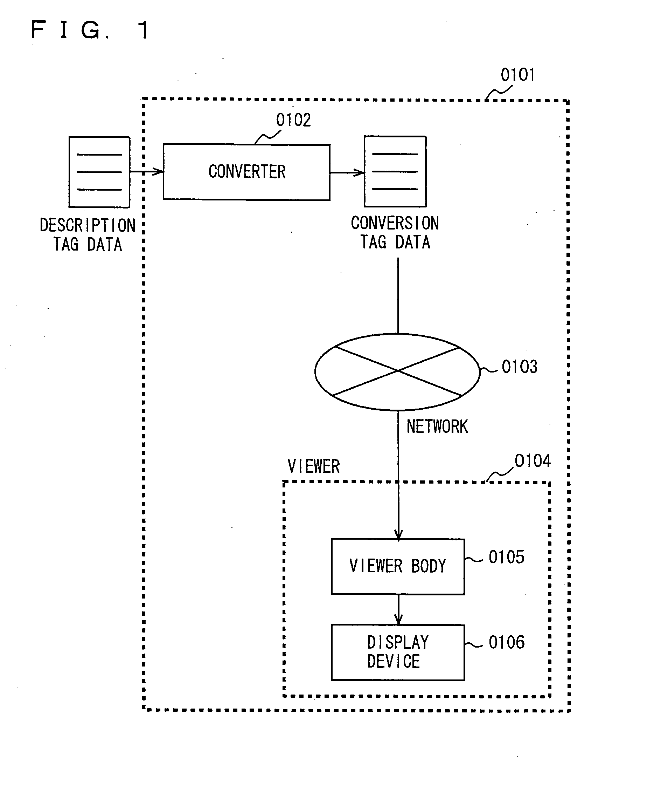

Referring to Fig. 1, system 0101 in accordance with the first embodiment is configured to include a converter 0102 and a viewer 0104 connected through a network 0103.

Network 0103 may be a network through a public circuit such as the Internet or may be a network through a private circuit such as a LAN (Local Area Network). Alternatively, without limiting to wired communications, the network may be via radio communications. It is noted that although in the present embodiment the data exchanges between converter 0102 and viewer 0104 will be described as data exchanges through network 0103, the data exchanges may be carried out through a medium that is a recording medium such as CD-ROM (Compact Disc-Read Only Memory) and FD (Flexible Disk) or through an internal memory, in place of the data exchanges through network 0103.

Converter 0102 converts tag information of description tag data and creates conversion tag data with a reduced volume. Converter 0102 then inputs the conversion tag data to viewer 0104 through network 0103.

Viewer 0104 is configured to include a viewer body 0105 and a display device 0106. Viewer body 0105 reads the conversion tag data received through network 0103 and outputs display data to display device 0106. Display device 0106 displays the display data.

It is noted that the present system 0101 may perform processing as the entire system while converter 0102 or viewer 0105 alone may perform processing as well.

Converter 0102 shown in Fig. 1 will now be described in more detail.

Converter 0102 converts character strings representing a tag name, an attribute name and an attribute value included in description tag data into other character strings according to a prescribed conversion rule and generates conversion tag data including the other character string as converted.

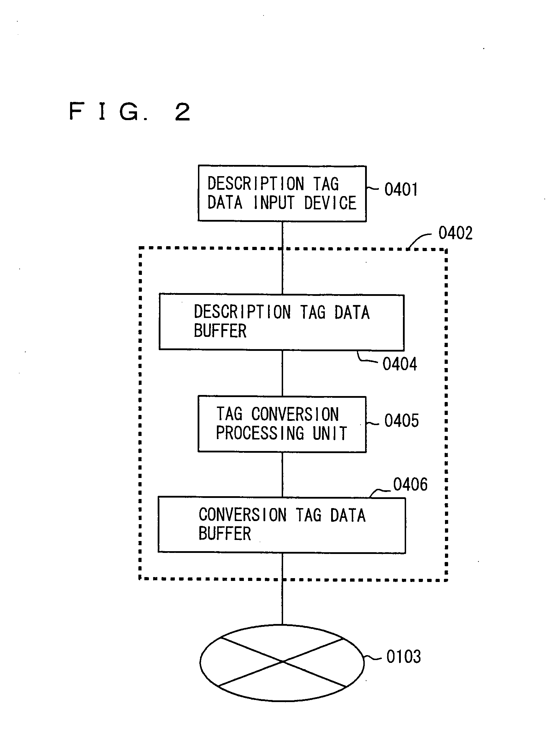

Referring to Fig. 2, converter 0102 is configured to include a description tag data input device 0401 receiving an input of description tag data and a converter body 0402 and uses converter body 0402 to convert the description tag data input at description tag data input device 0401 and output conversion tag data to network 0103.

Furthermore, converter body 0402 is configured to include a description tag data buffer 0404 storing the input description tag data, a tag conversion processing unit 0405 performing a process of conversion from description tag data to conversion tag data, and a conversion tag data buffer 0406 storing the conversion tag data converted at tag conversion processing unit 0405.

Description tag data buffer 0404 and conversion tag data buffer 0406 are realized by an RAM (Random Access Memory) such as a flash memory or a hard disk.

Tag conversion processing unit 0405 is realized, for example, by circuits independent of each other. Alternatively, it may be realized, for example, by a virtual circuit realized by an operation processing circuit of a computer or the like.

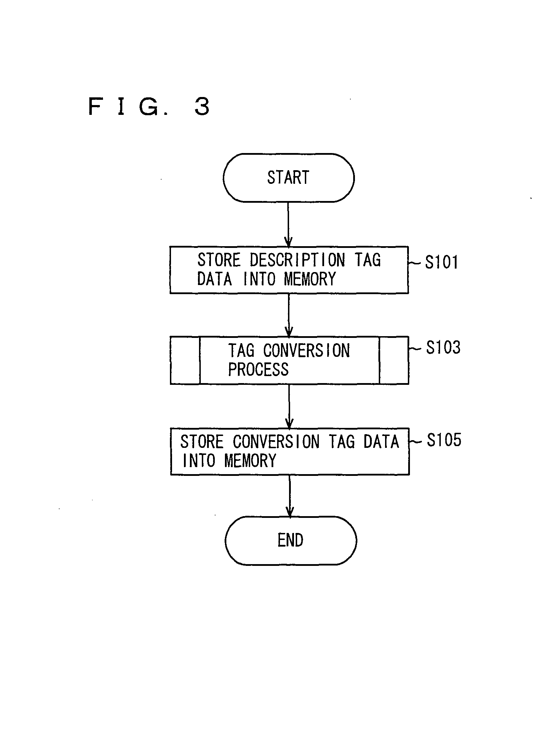

The process flow in converter 0102 will now be described using the flowchart in Fig. 3. The process shown in the flow chart of Fig. 3 is realized by a CPU (Central Processing Unit) (not shown) included in converter 0102 which reads and executes a program stored in a storage device (not shown) such as an ROM (Read Only Memory) to cause each unit shown in Fig. 2 to function.

Referring to Fig. 3, converter 0102 first stores the description tag data input from description tag data input device 0401 into description tag data buffer 0404 of converter body 0402 (S101).

Then, at tag conversion processing unit 0405, the description tag data stored in description tag data buffer 0404 is read and a conversion process is executed on the description tag data to generate conversion tag data (S 103). The present process of converting description data will be detailed later with reference to a subroutine.

Converter 0102 then stores the conversion tag data input from tag conversion processing unit 0405 in conversion tag data buffer 0406 (S105), and the process will end.

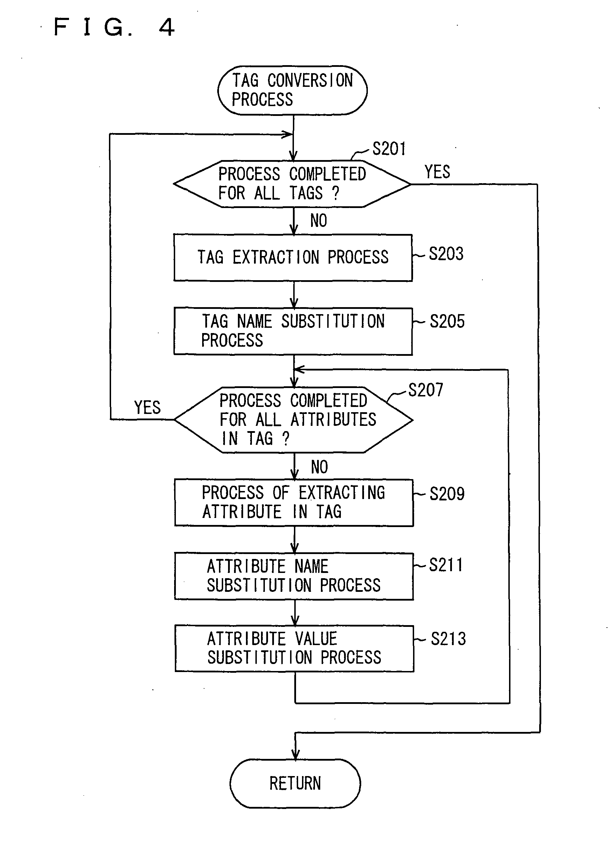

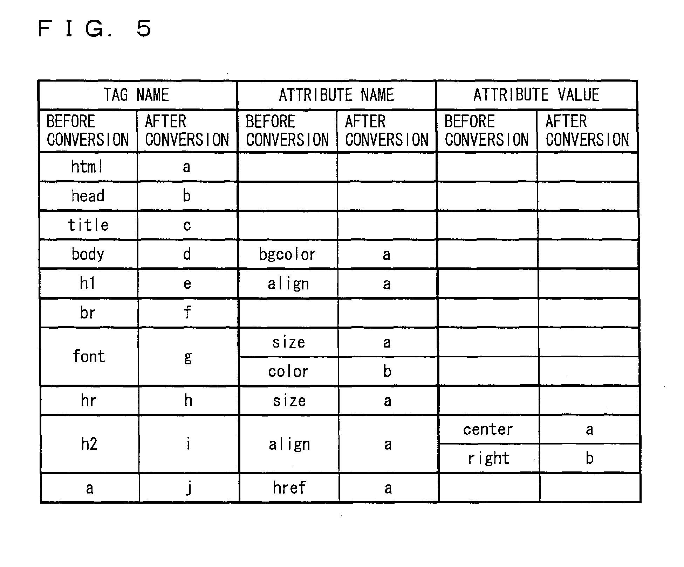

The process of converting description tag data executed at the aforementioned step S103 will be described in detail using the flowchart in Fig. 4. It is noted that, in the illustration of the flowchart in Fig. 4, the description tag data shown in Fig. 34 is to be converted according to the tag conversion rule shown in Fig. 5 for the sake of clarity. As shown in Fig. 5, the tag conversion rule is a rule for converting a character string representing a tag name or an attribute name included in description tag data into other character string and is characterized in that it is defined to make a conversion into a character string having the amount of data less (shorter) than that of a character string before conversion. Of course, description tag data may be data in other format as long as it is described in a markup language as defined above, and the tag conversion rule is not limited to the rule shown in Fig. 5 and can be set freely.

It is noted that, according to the tag conversion rule, as shown in Fig. 5, many become "a" after being converted, such as an html tag, a bgcolor attribute of a body tag, an align attribute of an h1 tag, and a size attribute of a font tag. Even if the character strings after conversion are the same, like character "a" as described above, they can be uniquely identified depending on whether a character string after conversion is a character string representing a tag name, an attribute name of which tag is represented by the character string, or an attribute value for an attribute name of which tag is represented by the character string.

This is because the tags are generally configured in the order of tag names, attribute names and attribute values, where an attribute value is arranged in a tag such that it always corresponds to an attribute name, and an attribute name is arranged in a tag such that it always corresponds to a tag name. In other words, tag names, attribute names, and attribute values are configured hierarchically in this order, like "<A B= C D>", "</A B=C D>", "<A B=C D/>" (each of A, B, C, D may be a character string formed of a plurality of characters). A indicates a tag name, B, D indicates an attribute name of tag name A, and C indicates an attribute value of attribute name B of tag name A. The difference between B and D is whether they have an attribute name or not. There exists one tag name A, and there exist a given number of attribute names corresponding to B, D (there may be zero, and the attribute names are different from each other) (the order of B, D may be arbitrary). C, B exist as a set in a tag. It is noted that "the arrangement of a character string in a tag" is a concept also including the number of character strings. As another example of the arrangement of a character string, when the arrangement of character strings in a tag is "<A B>", it can be identified according to the arrangement that character string A represents a tag name and character string B represents an attribute name. As yet another example of the arrangement of character strings, when the arrangement of a character string in a tag is "<A>", it can be identified according to the arrangement that character string A represents a tag name. In other words, unless identical character strings repeatedly appear in each hierarchy as character strings after conversion, even if identical character strings repeatedly appear in different hierarchies as character strings after conversion, it can be identified whether the character string after conversion is a character string representing a tag name, a character string representing an attribute name, or a character string representing an attribute value.

In such a manner, when a character string after conversion can be identified as a character string representing a tag name, a character string representing an attribute name, or a character string representing an attribute value according to its arrangement in a tag, the same character string is preferably allocated as a character string after conversion to a tag name, an attribute name and the like that are different from each other before conversion. By allocating the same character string as a character string after conversion to a tag name, an attribute name and the like that are different from each other before conversion, the bias of frequency of appearance of a character string in conversion tag data can be increased. When the volume of the conversion tag data after conversion is compressed in an arbitrary compression scheme such as Huffman coding or Zip, the compression effect can be improved.

Referring to Fig. 4, first, at tag conversion processing unit 0405, it is determined whether a substitution process described later has been completed for all the tags included in the description tag data stored in description tag data buffer 0404 (S201). Then, if there exists a tag for which substitution process has not been completed (NO at S201), the tag for which substitution process has not been performed is extracted from the description tag data (S203). Extracted at step S203 is an entire tag including at least one of a tag name, an attribute name, and an attribute value of the tag. When description tag data is described in, for example, XML (Extensible Hypertext Markup Language) format, HTML (Hypertext Markup Language) format or the like, a description enclosed by "<" or "</" and ">" or "/>" is extracted.

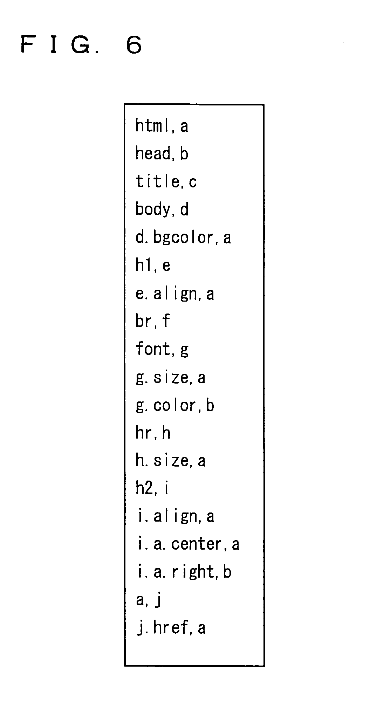

A character string representing a tag name included in a tag <note: singular> extracted at step S203 is substituted using the tag conversion table (S205). The tag conversion table used at step S205 is provided by putting a tag conversion rule into a table. When the tag conversion rule is as shown in Fig. 5, the tag conversion table is as shown in Fig. 6.

Referring to Fig. 6, in the conversion table, a name before conversion is separated from a name after conversion by a comma. For example, a description "html, a" in the conversion table means that tag name "html" is substituted with a character string "a". Furthermore, a description "g. size, a" in the conversion table means that size attribute of g tag is substituted with attribute name "a". In addition, a description "i. a. center, a" in the conversion table means that attribute value center for "a" attribute of i tag is substituted with attribute value "a". It is noted that the conversion table may be in any form as long as before and after conversions are associated with each other.

The substitution of a character string representing a tag name at step S205 is performed using the conversion table as shown in Fig. 6 and is a process of searching for a character string representing a tag name matching a character string before a comma in the conversion table among the tag names extracted at step S203 to convert that character string into a character string after the comma in the conversion table.

It is then determined whether the aforementioned substitution process has been completed for all the attributes of the tag <note: singular> extracted at step S203 (S207). Then, if there exists a tag including an attribute for which conversion process has not been completed (NO at S207), the attribute for which substitution process has not been completed is extracted from the tag <note: singular> extracted at step S203 (S209).

The character string representing the attribute name of the attribute of the tag extracted at step S209 is then substituted using the tag conversion table in the manner similar to the process at the step S205 described above (S211). Furthermore, the character string representing the attribute value for the attribute of the tag extracted at step S209 is also substituted using the tag conversion table in the manner similar to the process at step S205 described above (S213). The substitution at step S211 or step S213 is also a process of searching for an attribute name or an attribute value matching the character string before the comma in the conversion table among the attributes of the tag extracted at step S209 to convert the tag name into the attribute name or the attribute value after the comma of the conversion table.

The substitution process at steps S209-S213 as described above is executed until all the attributes included in the tag <note: singular> extracted at step S203 are substituted (YES at S207), and when the above substitution process has been completed for all the tags included in the description tag data stored in description tag data buffer 0404 (YES at S201), this process will end and return to the main routine shown in Fig. 3.

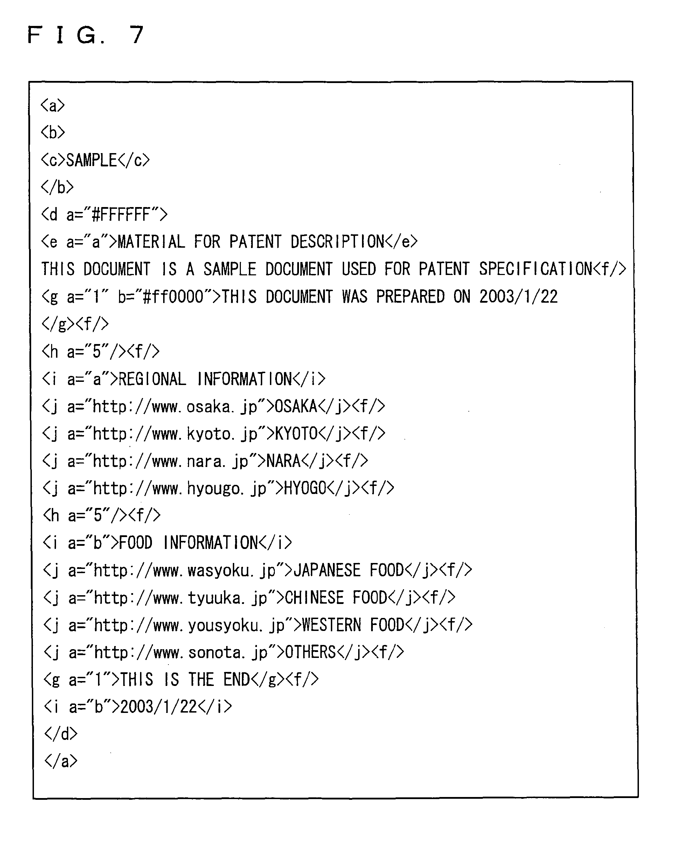

Converter 0102 in accordance with the present embodiment executes such a conversion process, whereby the description tag data shown in Fig. 34 is converted into the tag data shown in Fig. 7. More specifically, when the description tag data shown in Fig. 34 is compared with the conversion tag data shown in Fig. 7, the conversion tag data is decreased in redundancy of the document and is reduced in data amount since a character string representing a tag name, a character string representing an attribute name, and a character string representing an attribute value included in the description tag data are converted into shorter character strings. In addition, since the amount of information related to the tag included in the description tag data is reduced and the entire volume of data is thereby decreased, data transfer through network 0103 can be performed at high speed. In addition, when the exchanges take place through a media in place of the communications through network 0103, where the capacity of the media is limited, data including a lot of contents can be stored.

A markup language is a language that is based on a tag to execute access to data. When the markup language is decoded to perform data access, the process of searching for tag names or attributes is frequently performed. Therefore, the aforementioned substitution performed at converter 0102 in the present embodiment decreases the number of characters of most (or all) of the character strings representing tag names, attribute names included in the markup language, thereby reducing the amount of processing of searching for them. As a result, the amount of data access processing is reduced as a whole thereby increasing the processing speed.

In other words, the aforementioned processes are executed at converter 0102 in the present embodiment so that both a reduced amount of data and a decreased amount of processing required for data access are realized at the same time.

### (Modification)

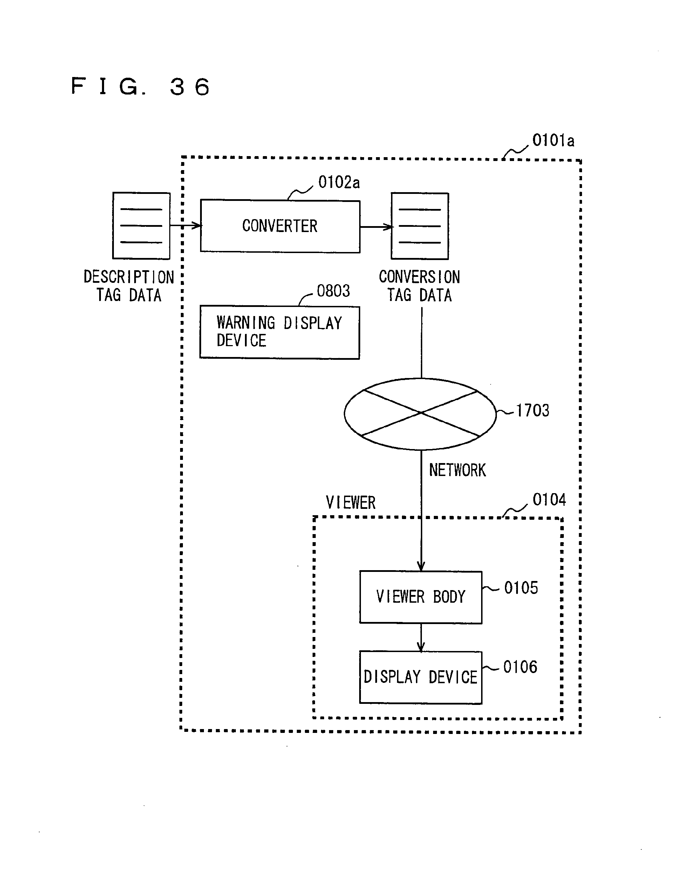

When the user of converter 0102 should be notified of any problem or notice during conversion from description tag data into conversion tag data at converter 0102, converter 0102 needs to indicate a message conveying the contents thereof to the converter user. A converter 0102a with a function of performing a warning display to the user of converter 0102 in addition to the configuration of converter 0102 shown in Fig. 2 as described above will now be described as a modified embodiment. Referring to Fig. 36, a system 0101a in accordance with a modification to the first embodiment is configured to include a converter 0102a and a viewer 0104 connected through a network 1703.

It is noted that converter 0102a in the modified embodiment outputs the contents of the message using a character string representing a tag name and the like of description tag data before conversion even if the timing of issuing the message is after a character string representing a tag name and the like of description tag data has been converted inside converter 0102a. Therefore, the user of converter 0102a can easily understand the contents of the message.

Specifically, where model A of the corresponding viewer 0104 has a low processing capacity and is significantly slow in display operation for the contents exceeding a certain volume (for example 500 bytes), converter 0102a in the modified embodiment notifies the user of converter 0102a that, as a warning, the volume (over 500 bytes) of the conversion tag data as the created contents may preclude the use in model A of viewer 0104, if applicable. Furthermore, it is preferable to notify the user to which position of which description tag data model A of viewer 0104 can display in order to help the user of converter 0102a to review the description tag data. A specific example of such a message will be detailed later with reference to the figure.

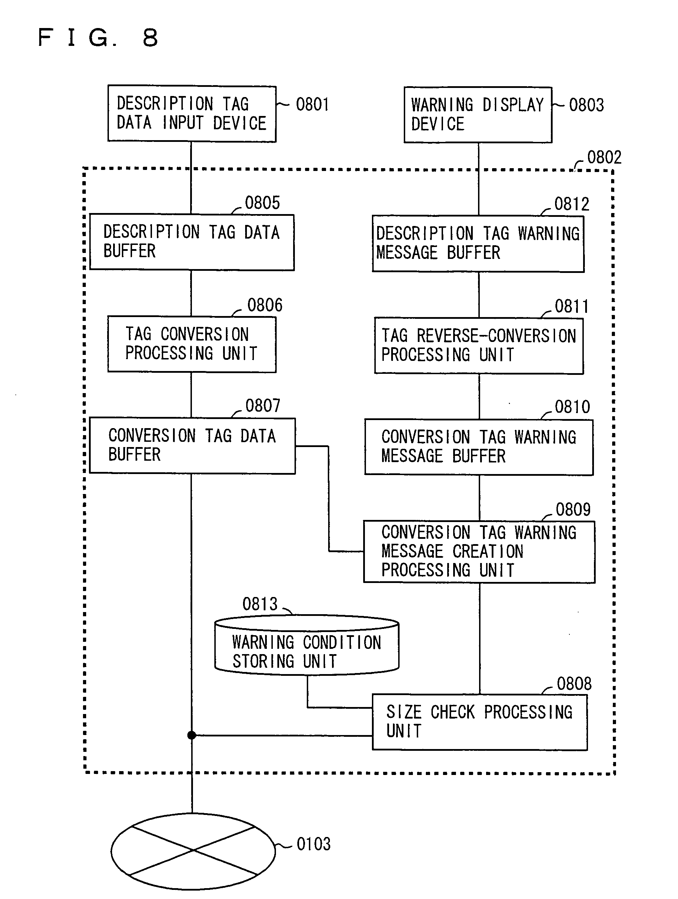

Referring to Fig. 8, converter 0102a in the modified embodiment is configured to include a description tag data input device 0801 receiving an input of description tag data, converter body 0802, and a warning display device 0803. Description tag data input device 0801 is similar to description tag data input device 0401 shown in Fig. 2. The description tag data input by description tag data input device 0801 is converted by converter body 0802 and the conversion tag data is output to network 0103. In addition, a description tag warning message is output to warning display device 0803.

Furthermore, converter body 0802 is configured to include a description tag data buffer 0805 storing the input description tag data, a tag conversion processing unit 0806 performing a conversion from description tag data to conversion tag data, a conversion tag data buffer 0807 storing the conversion tag data converted by tag conversion processing unit 0806, a warning condition storing unit 0813 storing a warning condition such as the volume displayable on viewer 0104, a size check processing unit 0808 checking the volume of conversion tag data, a conversion tag warning message creation processing unit 0809 creating a conversion tag warning message, a conversion tag warning message buffer 0810 storing the conversion tag warning message created by conversion tag warning message creation processing unit 0809, a tag reverse-conversion processing unit 0811 converting a conversion tag warning message into a description tag warning message, and a description tag warning message buffer 0812 storing the description tag warning message created by tag reverse-conversion processing unit 0811.

Storage tag data buffer 0805, conversion tag data buffer 0807, conversion tag warning message buffer 0810, description tag warning message buffer 0812, and warning condition storing unit 0813 are realized by an RAM such as a flash memory or a hard disk.

Tag conversion processing unit 0806, size check processing unit 0808, conversion tag warning message creation processing unit 0809, and tag reverse-conversion processing unit 0811 are realized, for example, by circuits independent of each other. Alternatively, they may be realized, for example, by a virtual circuit realized by an operation processing circuit of a computer or the like.

It is noted that description tag data buffer 0805, tag conversion processing unit 0806, and conversion tag data buffer 0807 are similar to description tag data buffer 0404, tag conversion processing unit 0405, and conversion tag data buffer 0406 shown in Fig. 2.

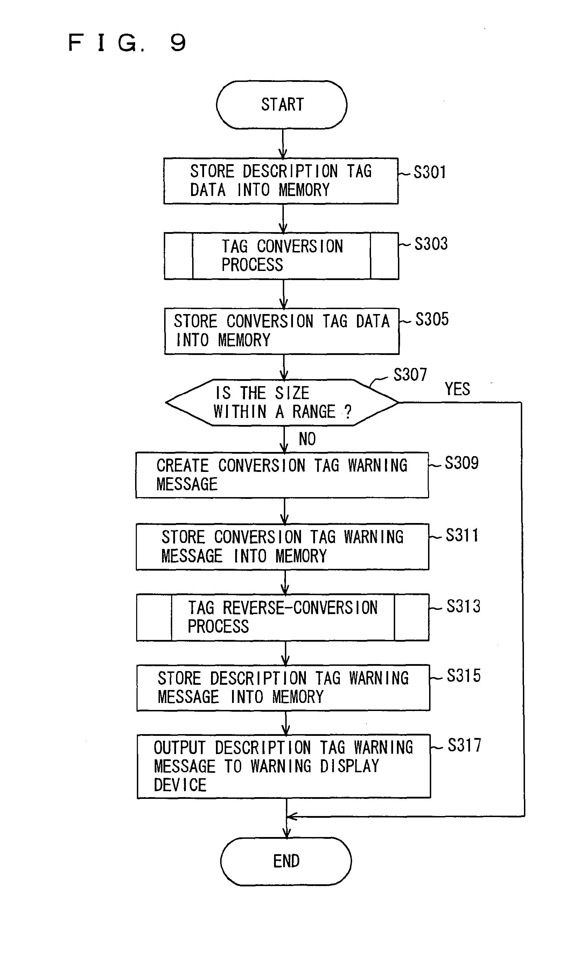

The flow of the process in converter 0102a will now be described using the flowchart in Fig. 9. The process shown in the flowchart of Fig. 9 is also realized by a CPU (not shown) included in converter 0102a which reads and executes a program stored in a storage device (not shown) such as an ROM to cause each unit shown in Fig. 8 to function. It is noted that steps S301-S305 of Fig. 9 represent the same processes as steps S101-S105 of the flowchart shown in Fig. 4 as described above, and therefore the processes following step S307 will be described here.

Referring to Fig. 9, size check processing unit 0808 refers to warning condition storing unit 0813 to determine whether the volume of the conversion tag data stored in conversion tag data buffer 0807 is such that can be displayed on viewer 0104 (500 bytes or less) (S307).

As a result of the determination at step S307, if the volume of the conversion tag data is such that can be displayed on model A of viewer 0104 (500 bytes or less) (YES at S307), the process will end.

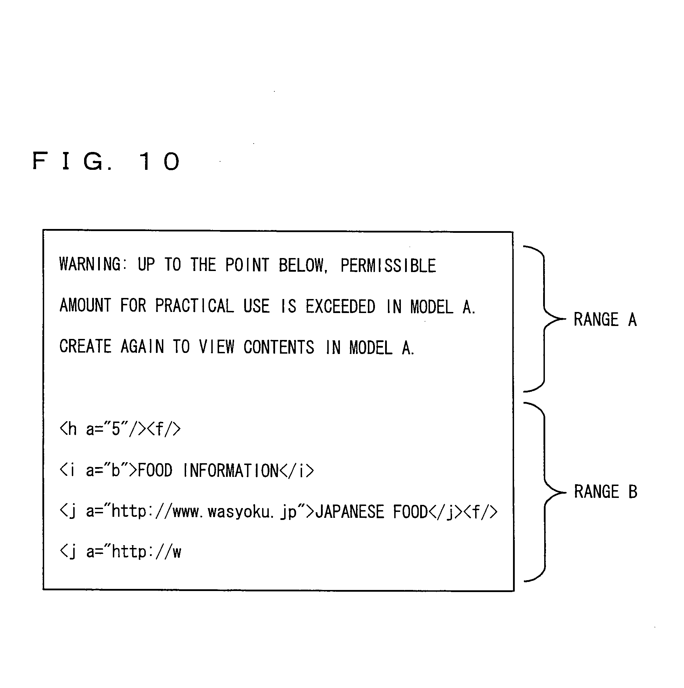

On the other hand, as a result of the determination at step S307, if the volume of the conversion tag data is such that cannot be displayed on model A of viewer 0104 (500 bytes or more) (NO at S307), a conversion tag warning message is created at conversion tag warning message creation processing unit 0809 (S309). An exemplary conversion tag warning message created at step S309 is shown in Fig. 10. Referring to Fig. 10, a conversion tag warning message includes contents of a message (range A) and a display (range B) indicating a reference position within conversion tag data. It is noted that Fig. 10 shows a conversion tag warning message in which 100 bytes preceding a position 500 bytes from the top of the conversion tag data are copied to be displayed as the reference position.

The conversion tag warning message created at step S309 is then stored in conversion tag warning message buffer 0810 (S311).

Then, at tag reverse-conversion processing unit 0811, the conversion tag warning message stored in conversion tag warning message buffer 0810 is converted into a description tag warning message (S313), and the converted description tag warning message is stored into description tag warning message buffer 0812 (S315). It is noted that the process of conversion of the conversion tag warning message at step S313 (a tag reverse-conversion process) will be detailed later with reference to a subroutine.

Furthermore, the description tag warning message stored in description tag warning message buffer 0812 is output from converter body 0802 to warning display device 0803 (S317), and the process will end.

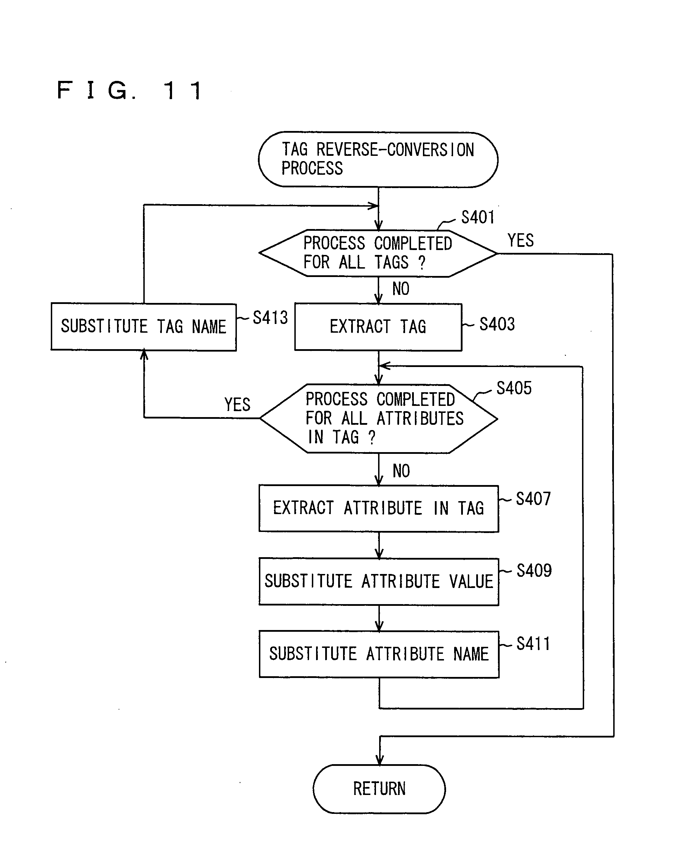

The tag reverse-conversion process executed at the above step S313 will be described in detail using the flowchart of Fig. 11.

Referring to Fig. 11, first, it is determined at tag reverse-conversion processing unit 0811 whether a substitution process described later has been completed for all the tags included in the conversion tag warning message stored in conversion tag warning message buffer 0810 (S401). Then, if there is a tag for which substitution process has not been completed (NO at S401), the tag for which substitution process has not been performed is extracted from the conversion tag warning message (S403).

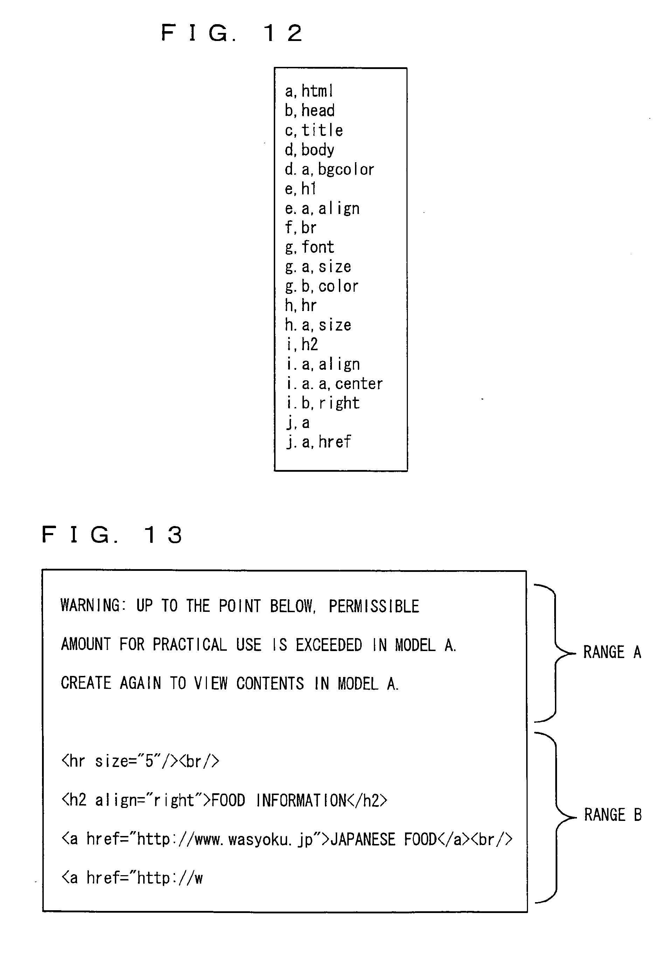

It is further determined whether a substitution process described later has been completed for all the attributes of the tag <note: singular> extracted at step S403 (S405). Then, if there exists an attribute for which substitution process has not been completed (NO at S405), the attribute for which substitution process has not been completed is extracted from the tag extracted at step S403 (S407), and a character string representing its attribute value and a character string representing its attribute name are substituted using a reverse-conversion table (S409, S411). The reverse-conversion table used at step S409 or S411 is formed by putting the reverse-conversion of the tag conversion rule into a table. When the tag conversion rule is as shown in Fig. 5, the reverse-conversion table is as shown in Fig. 12.

Referring to Fig. 12, the reverse-conversion table shows that a name before conversion is separated from a name after conversion by a comma. For example, a description "a, html" in the reverse-conversion table means that a character string "a" representing a tag name is substituted with a character string "html" representing a tag name. A description "h. a, size" in the reverse-conversion table means that attribute "a" of h tag is substituted with size attribute. A description "i. a. a, center" in the reverse-conversion table means that attribute value "a" for attribute "a" of i tag is substituted with attribute value center.

At the steps S409, S411 as described above, the reverse-conversion table as shown in Fig. 12 is used to substitute a character string representing an attribute value and a character string representing an attribute name included in a tag extracted from a conversion tag warning message that is not subjected to a substitution process. It is noted that the detailed method is similar to the substitution process using a tag conversion table in the conversion process for description tag data that is executed at step S103 described above.

When the substitution process at the above steps S407-S411 is executed until all the attributes of the tag <note: singular> extracted at step S403 are substituted (YES at S405), the character string representing the tag name of the tag extracted at step S403 is then substituted using a similar reverse tag conversion table (S413).

The process will thereafter return to step S401, and if it is confirmed that the aforementioned substitution process has been completed for all the tags included in the conversion tag warning message stored in conversion tag warning message buffer 0810 (YES at S401), this process will end and return to the main routine shown in Fig. 9.

It is noted that Fig. 13 shows an exemplary description tag warning message where the conversion tag warning message shown in Fig. 10 is converted in the aforementioned reverse-conversion process. Referring to Fig. 13, the description tag warning message includes contents of a message (range A) and a display indicative of a reference position within description tag data before conversion (range B).

The description tag warning message as shown in Fig. 13 is displayed on warning display device 0803, whereby the user of converter 0102a can easily understand the contents thereof and can also review and rewrite the entered description tag data according to the contents of the message.

It is noted that although the description above illustrates a specific example where a warning based on the display capacity of model A of viewer 0104 is issued from converter 0102a, the contents of the message are not limited to the display capacity of viewer 0104 and other conditions may be employed. In that case, warning condition storing unit 0813 stores a warning condition according to warning contents, and size check processing unit 0808 refers to the warning condition stored in warning condition storing unit 0813 to check whether the conversion tag data meets the warning condition. It is noted that the warning condition may not be stored in warning condition storing unit 0813, and in the case of the condition concerned with another device such as the display capacity of viewer 0104, for example, it may be obtained from another device as necessary.

Viewer body 0105 included in viewer 0104 shown in Fig. 1 will now be described in more detail.

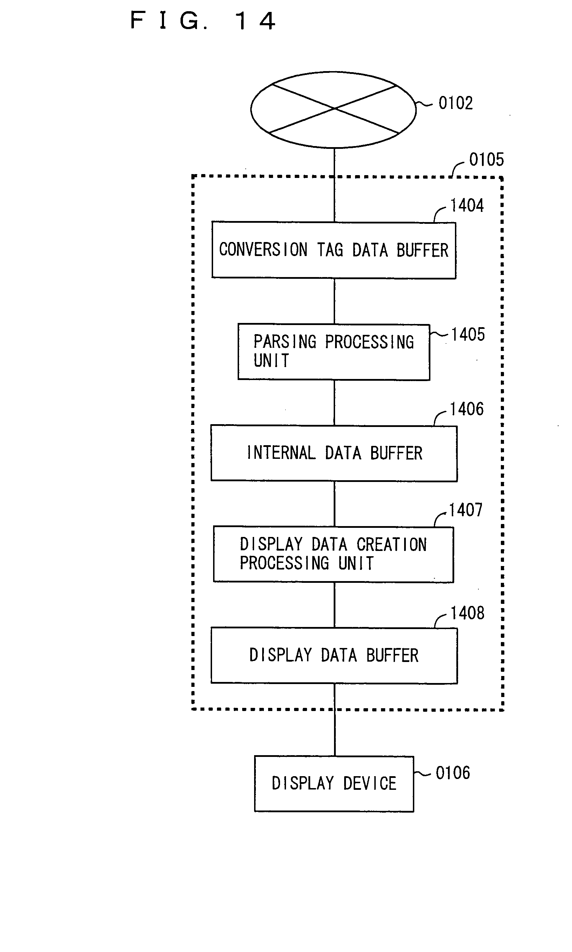

Fig. 14 shows an exemplary configuration of viewer body 0105 in the present embodiment. Viewer body 0105 receives conversion tag data from converter 0102 through network 0103 and outputs display data to display device 0106.

Referring to Fig. 14, viewer body 0105 is configured to include a conversion tag data buffer 1404 storing conversion tag data, a parsing processing unit 1405 performing a parsing (analysis) process for creating display data of conversion tag data, an internal data buffer 1406 storing internal data, a display data creation processing unit 1407 performing creation of display data based on an analysis result in parsing processing unit 1405, and a display data buffer 1408 storing display data.

Conversion tag data buffer 1404, internal data buffer 1406, and display data buffer 1408 are realized by an RAM such as a flash memory or a hard disk.

Parsing processing unit 1405 and display data creation processing unit 1407 are realized, for example, by circuits independent of each other. Alternatively, they may be realized, for example, by a virtual circuit realized by an operation processing circuit of a computer or the like.

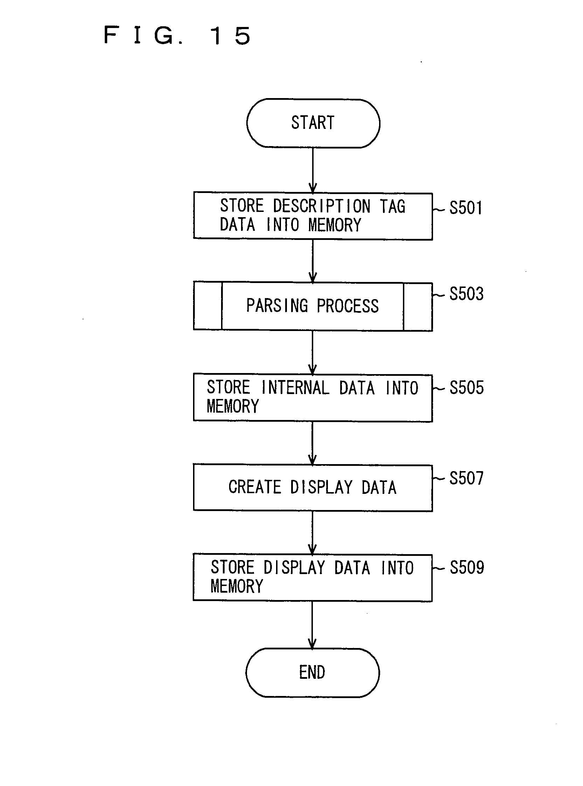

The flow of the process in viewer body 0105 will now be described using the flowchart of Fig. 15. The process shown in the flowchart of Fig. 15 is realized by a CPU (not shown) included in viewer body 0105 which reads and executes a program stored in a storage device (not shown) such as an ROM to cause each unit shown in Fig. 14 to function.

Referring to Fig. 15, first, viewer body 0105 stores the input conversion tag data in conversion tag data buffer 1404 (S501).

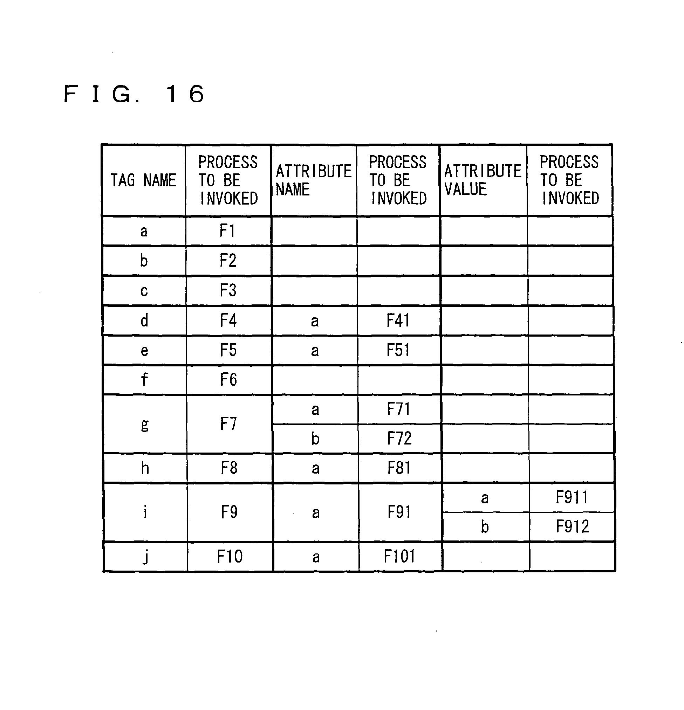

Then, at parsing processing unit 1405, a parsing (analysis) process is performed for creating display data from the conversion tag data stored in conversion tag data buffer 1404 (S503). At step S503, the analysis for creating display data from conversion tag data is performed by switching the processes to be executed based on character strings representing a tag name, an attribute name and an attribute value after conversion included in the conversion tag data. More specifically, when the process is executed in accordance with the correspondence shown in Fig. 16, for example, process F1 is executed corresponding to "a" tag included in the conversion tag data. Process F4 is executed corresponding to "d" tag included in the conversion tag data, and process F41 is executed corresponding to attribute "a" included in that "d" tag. Furthermore, process F9 is executed corresponding to "i" tag included in the conversion tag data, process F91 is executed corresponding to attribute "a" included in that "i" tag, and process F911 is executed corresponding to attribute value "a" for that attribute "a".

The parsing result for creating display data at step S503 is stored in internal data buffer 1406 as internal data (S505).

Then, at display data creation processing unit 1407, display data is created based on the internal data stored in internal data buffer 1406 (S507). The method of creating display data at step S507 is a method which is performed in a general viewer and is not restricted in the present invention.

Then, the display data created at step S507 is stored in display data buffer 1408 (S509). This is the end of the present process.

This display data stored in display data buffer 1408 is output to display device 0106, whereby the contents and the like based on the conversion tag data is displayed on display device 0106.

In this way, in accordance with viewer body 0105 in the present embodiment, an operation is performed for displaying conversion tag data converted at converter 0102 with a reduced amount of information (in this case, a reduced number of characters), thereby reducing a required memory capacity. In addition, since a parsing operation based on the converted character string as described above is performed also in viewer body 0105, the conversion tag data is searched for a tag name, an attribute name and an attribute value represented by character strings with a small number of characters. In other words, the number of characters to be searched in the parsing operation is decreased, thereby enabling high speed processing.

Furthermore, viewer body 0105 described above can easily be constructed without any modification to the configuration of the conventional viewer body since it can be realized only by changing the character strings representing a tag name, an attribute name and an attribute value to be searched for during the parsing operation in the parsing processing unit of the aforementioned general viewer body, to the character strings after conversion.

### [Second Embodiment]

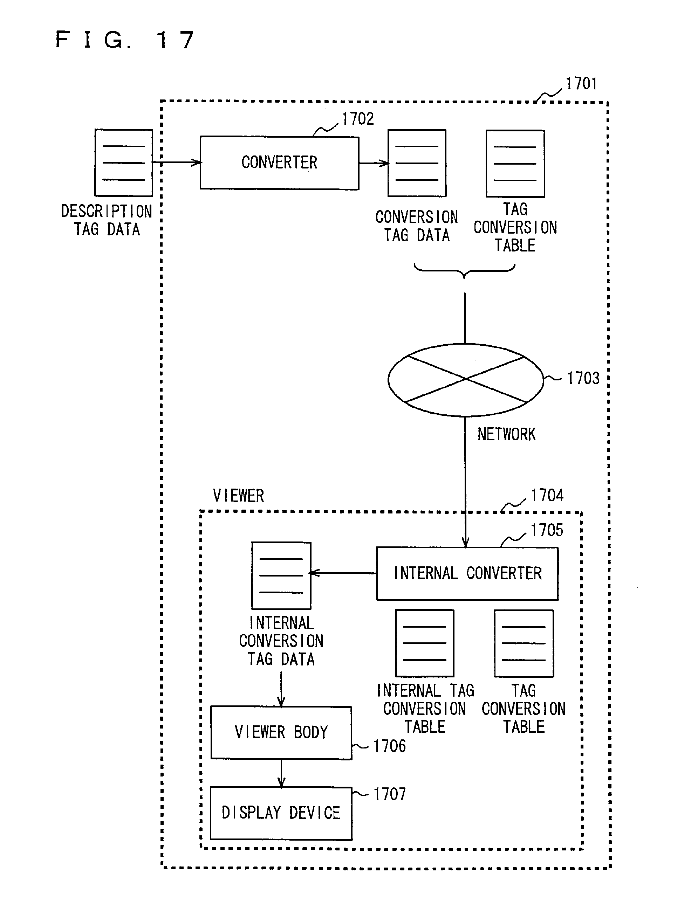

Referring to Fig. 17, a system 1701 in accordance with a second embodiment is also configured to include a converter 1702 and a viewer 1704 connected through a network 1703.

Network 1703 may be a network through a public circuit such as the Internet or may be a network through a circuit such as a LAN Alternatively, without limiting to wired communications, the network may be via radio communications. It is noted that although in the present embodiment the data exchanges between converter 1702 and viewer 1704 will also be described as data exchanges through network 1703, the data exchanges may be through a medium or may be through an internal memory, in place of the data exchanges through network 1703.

Viewer 1704 is configured to include an internal converter 1705 creating from conversion tag data and tag conversion table internal conversion tag data that can be interpreted by viewer body 1706, a viewer body 1706 interpreting the internal conversion tag data and transferring display data to display device 1707, and a display device 1707.

While the tag conversion rule is fixed by having the same tag conversion table contained in converter 0102 and viewer body 0105 in system 0101 in accordance with the first embodiment shown in Fig. 1, the tag conversion rule can be set dynamically for each contents by transferring the tag conversion table from converter 1702 to viewer 1704 in system 1701 in accordance with the second embodiment shown in Fig. 17.

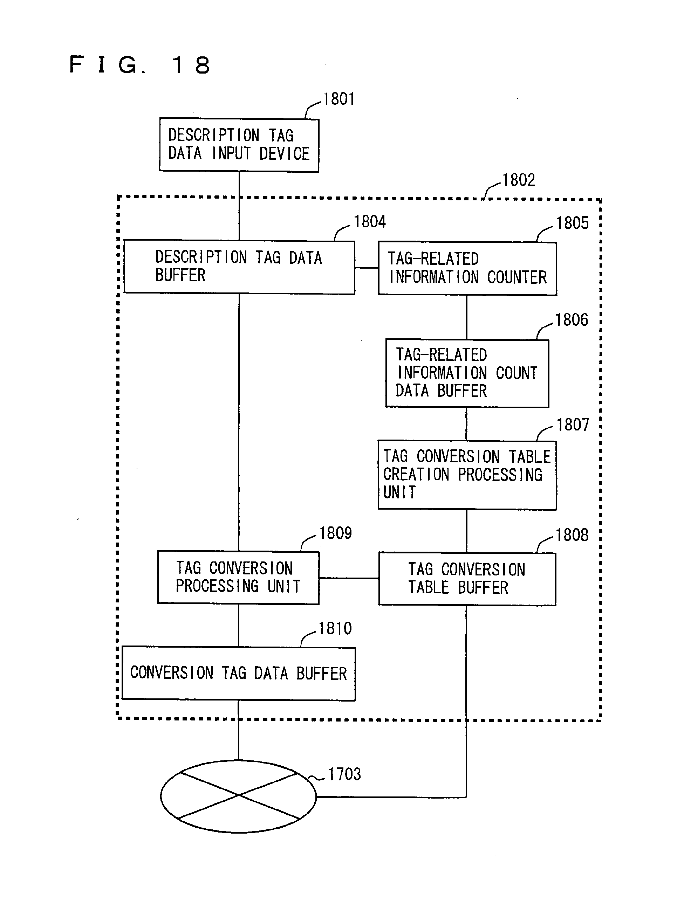

Referring to Fig. 18, converter 1702 is configured to include a description tag data input device 1801 receiving an input of description tag data and a converter body 1802 for converting the description tag data input at description tag data input device 1801 and outputting the conversion tag data and the tag conversion table to be used for the conversion to network 1703.

Converter body 1802 is configured to include a description tag data buffer 1804 storing description tag data, a tag-related information counter 1805 counting a frequency of appearance of tag-related information within description tag data, tag-related information count data buffer 1806 storing tag-related information count data, a tag conversion table creation processing unit 1807 creating a tag conversion table, a tag conversion table buffer 1808 storing a tag conversion table, a tag conversion processing unit 1809 performing a tag conversion process to create conversion tag data, and a conversion tag data buffer 1810 storing conversion tag data.

Description tag data buffer 1804, tag-related information count data buffer 1806, tag conversion table buffer 1808, and conversion tag data buffer 1810 are realized by an RAM such as a flash memory or a hard disk.

Tag-related information counter 1805, tag conversion table creation processing unit 1807, and tag conversion processing unit 1809 are realized, for example, by circuits independent of each other. Alternatively, they may be realized, for example, by a virtual circuit realized by an operation processing circuit of a computer or the like.

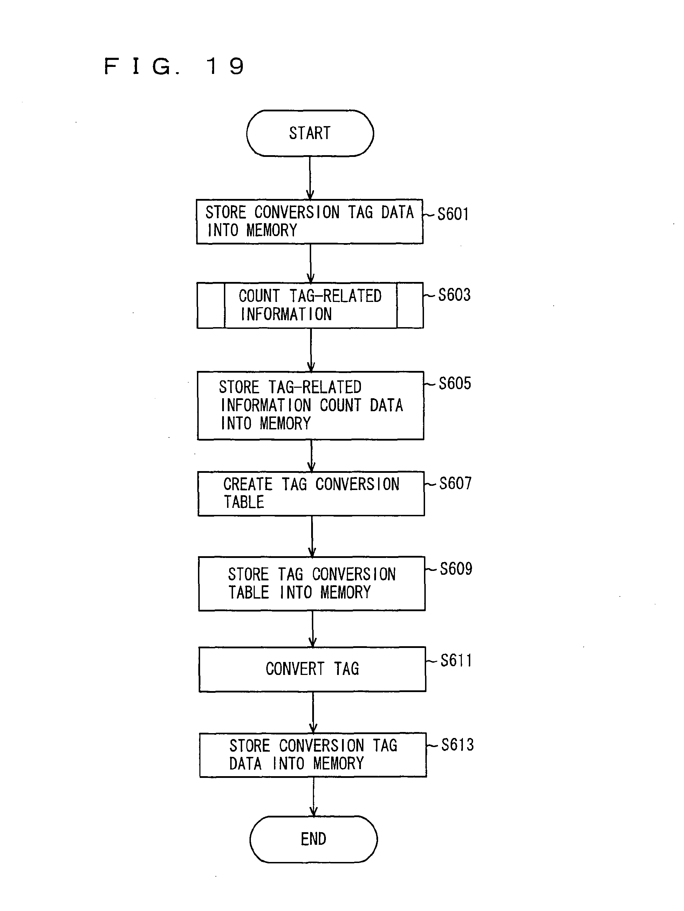

The flow of the process in converter 1702 will now be described using the flowchart of Fig. 19. The process shown in the flowchart of Fig. 19 is realized by a CPU (not shown) included in converter 1702 which reads and executes a program stored in a storage device (not shown) such as an ROM to cause each unit shown in Fig. 18 to function.

Referring to Fig. 19, converter 1702 first stores the description tag data input from description tag data input device 1801 to description tag data buffer 1804 of converter body 1802 (S601).

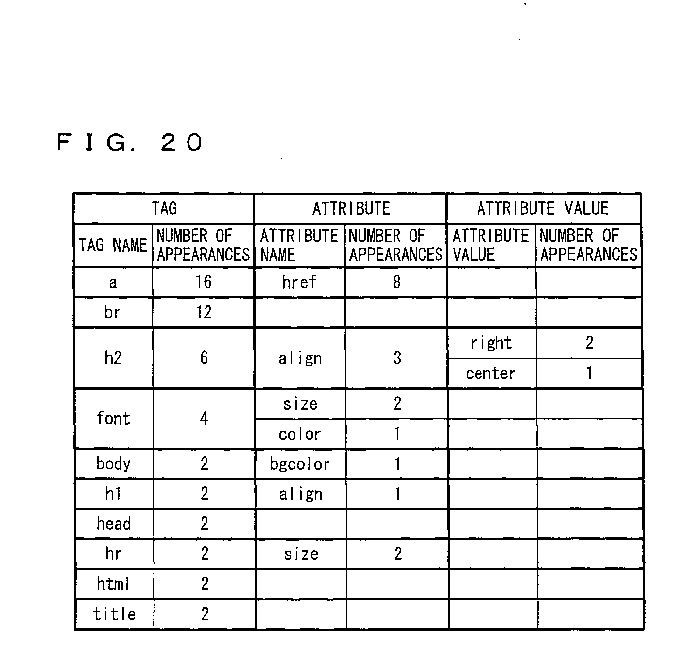

Then, at tag-related information counter 1805, the tag-related information included in the description tag data stored in description tag data buffer 1804 is counted (S603). Here, the number of appearances of a character string representing a tag name, a character string representing an attribute, and a character string representing an attribute value in the description tag data is counted respectively as tag-related information. When the description tag data is as shown in Fig. 34, the tag information count data as shown in Fig. 20 is obtained at step S603. It is noted that the count process for the tag-related information at step S603 will be detailed later with reference to a subroutine. The tag information count data obtained at step S603 is then stored in tag information count data buffer 1806 (S605).

Then, at tag-related information table creation processing unit 1807, a tag conversion table is created based on the tag-related information count data stored in tag information count data buffer 1806 (S607). The process of creating a tag conversion table at step S607 is executed in the following method.

More specifically, with reference to the tag information count data, character strings after conversion are allocated in alphabetical order starting from "a" to the character strings each representing a tag name in descending order of the number of appearances in the description tag data, thereby creating a tag conversion table. In addition, alphabets are respectively allocated similarly to character strings representing attribute names included in each tag in descending order of the number of appearances, thereby creating a tag conversion table. Alphabets are respectively allocated similarly to character strings representing attribute values for each attribute name of each tag in descending order of the number of appearances, thereby creating a tag conversion table.

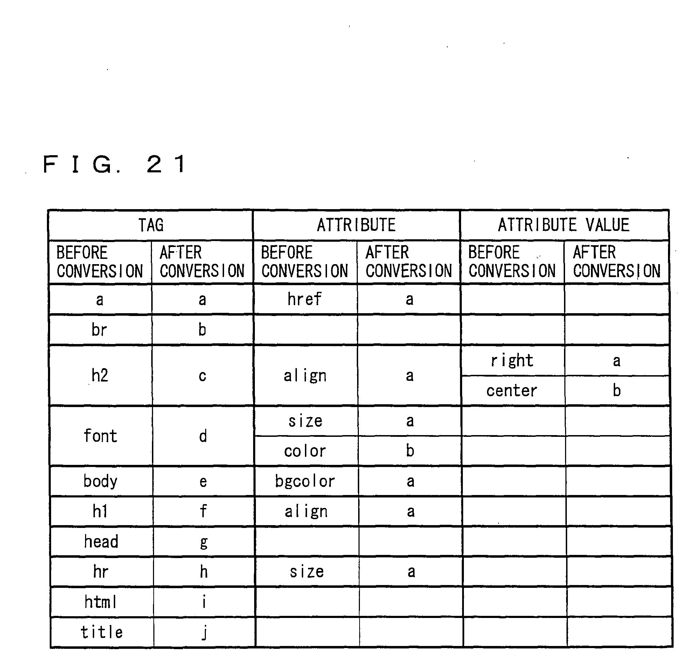

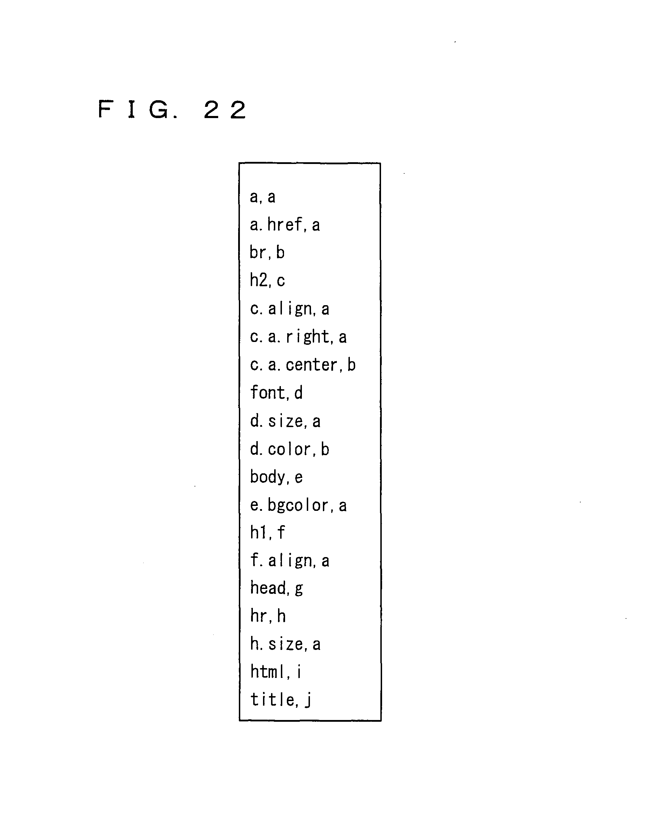

For example, at step S607, when a tag conversion table is created based on the tag-related information count data shown in Fig. 20, a conversion rule as shown in Fig. 21 is produced. Such a conversion rule is put into a table, for example, like a tag conversion table shown in Fig. 22. It is noted that the data structure of the tag conversion table as shown in Fig. 22 is the same as the data structure of the tag conversion table used in converter 0102 in the first embodiment.

The tag conversion table obtained at step S607 is stored in tag conversion table buffer 1808 (S609).

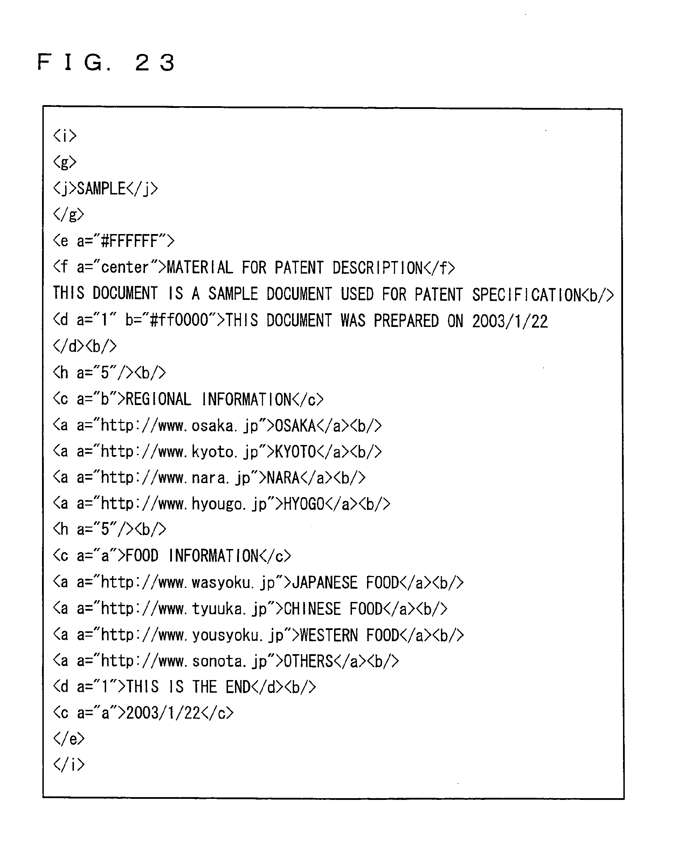

Then, at tag conversion processing unit 1809, the tag conversion table stored in tag conversion table buffer 1808 and the description tag data stored in description tag data buffer 1804 are used to perform a tag conversion process to create conversion tag data (S611). It is noted that when the description tag data is as shown in Fig. 34, the conversion tag data shown in Fig. 23 is created at step S611.

The conversion tag data created at step S611 is stored in conversion tag data buffer 1810 (S613), and the process will end.

Converter 0102 outputs the conversion tag data stored in this conversion tag data buffer 1810 and the tag conversion table stored in tag conversion table buffer 1808 to viewer 1704 through network 1703.

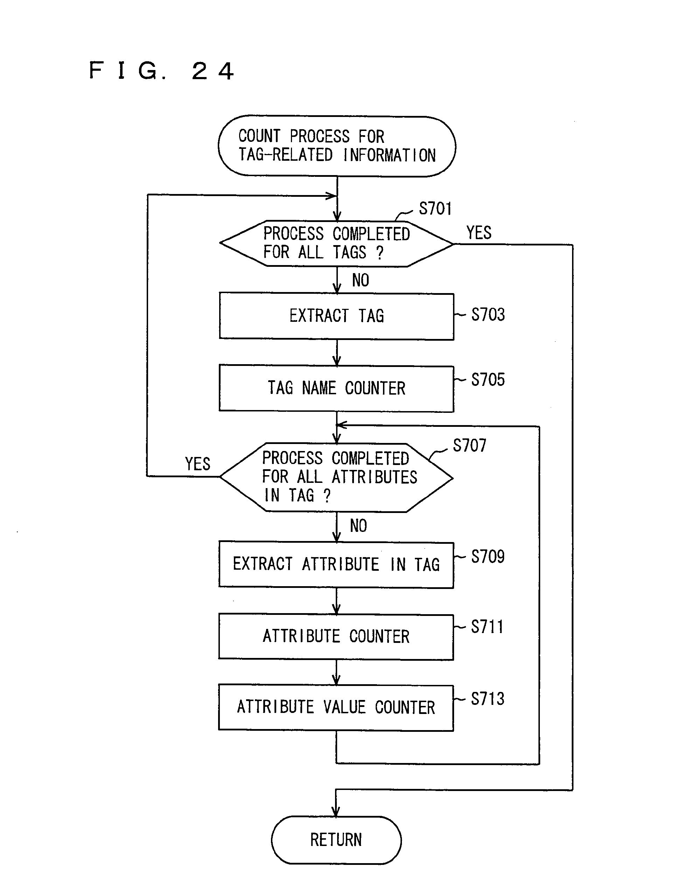

The count process for tag-related information to be executed at the above step S603 will be detailed using the flowchart of Fig. 24. In the count process for tag-related information, the number of appearances of a character string representing each tag name in the description tag data, the number of appearances of a character string representing each attribute of each tag, and the number of appearances of a character string representing each attribute value for each attribute of each tag are respectively counted.

Referring to Fig. 24, it is first determined at tag conversion processing unit 1809 whether the count process described later has been completed for all the tags included in the description tag data stored in description tag data buffer 1804 (S701). Then, when there exists a tag for which count process has not been completed (NO at S701), the tag for which count process has not been performed is extracted from the description tag data (S703).

Then, a count process is performed on the character string representing the tag name of the tag <note: singular> extracted at step S703 (S705). At step S705, if the character string representing the tag name of the tag extracted at step S703 is a character string representing a tag name that appears in the description tag data for the first time, a counter variable of the character string representing that tag name is generated and initialized to 1. On the other hand, if the character string representing the tag name is not a character string that appears for the first time, the counter variable of the character string representing that tag name is incremented by 1.

Then, it is determined whether the aforementioned count process has been completed for all the attributes within the tag extracted at step S703 (S707). Then, if there exists an attribute for which count process has not been completed within the tag extracted at step S703 (NO at S707), the attribute for which count process has not been completed is extracted from the tag extracted at step S703 (S709).

Then, the count process is performed on the character string representing the attribute name of the tag extracted at step S709 in the manner similar to the process at the above step S705 (S711). At step S711, if the character string representing the extracted attribute name is a character string representing an attribute name that appears for the first time in the tag having that tag name, a counter variable of the character string representing the attribute name of the tag name is generated and initialized to 1. On the other hand, if the character string representing the extracted attribute name is not a character string representing the attribute name that appears in the tag having the tag name that tag name, the counter variable of the character string representing the attribute name of the tag name is incremented by 1.

Furthermore, the count process is also performed on the attribute value for the attribute of the tag extracted at step S709 (S713). At step S713, as for an attribute value, only in a case of a prescribed attribute value (for example, an attribute value for align attribute of h2 tag), the character string representing the attribute value is subjected to the count process (conversion target). This is due to the circumstances where attribute values taking the form of arbitrary character strings have a high degree of flexibility and thus the same attribute value hardly appears multiple times in the description tag data, so that the volume is unlikely to be reduced by converting a character string representing an attribute value. It is therefore preferable that, in order to reduce the loads to the conversion process, the attribute values to be subjected to the count process (conversion target) are limited to those that are likely to appear multiple times. Of course, the count process may be performed on all the character strings representing attribute values without such a limitation.

Then, at step S713, when the attribute value of the extracted attribute is a prescribed attribute value to be subjected to the count process, the count process is performed on the character string representing the attribute value. In such a case, if the character string representing the attribute value for the attribute name of the tag name is a character string that appears for the first time as the attribute value for the attribute name of the tag name, a counter variable of the character string representing the attribute value for the attribute of the tag name is generated and initialized to 1. On the other hand, if the character string representing the attribute value for the attribute name of the tag name is not a character string that appears for the first time as the attribute value for the attribute name of the tag name, the counter variable is incremented by 1.

The count process at the above steps S709-S713 is executed until the attribute included in the tag extracted at step S703 is counted (YES at S707), and when the count process described above has been completed for all the tags included in the description tag data stored in description tag data buffer 1804 (YES at S701), this process will end and return to the main routine shown in Fig. 19.

The count process described above is executed thereby resulting in the tag information count data shown in Fig. 20, if the description tag data is a description tag data shown in Fig. 34.

As described above, converter 1701 in the present embodiment is characterized in that a tag conversion table is decided according to the frequency of appearance of a character string representing a tag name, a character string representing an attribute name, and a character string representing an attribute value in description tag data. Therefore, the bias of the frequency of appearance of a character string in conversion tag data becomes even greater than the bias of the frequency of appearance of a character string in the tag conversion table for use in converter 0102 in the first embodiment, so that the effect of compressing the conversion tag data in a compression format such as Huffman coding or Zip format is further greater than when the description tag data is converted by converter 0102 of the first embodiment.

It is noted that character strings after conversion are allocated in alphabetical order in the tag conversion table in the example above, the allocation order and characters may be selected freely. Furthermore, even greater effect can be achieved when this allocation takes place in descending order of frequency of a character string used in a document of description tag data (a portion other than tags).

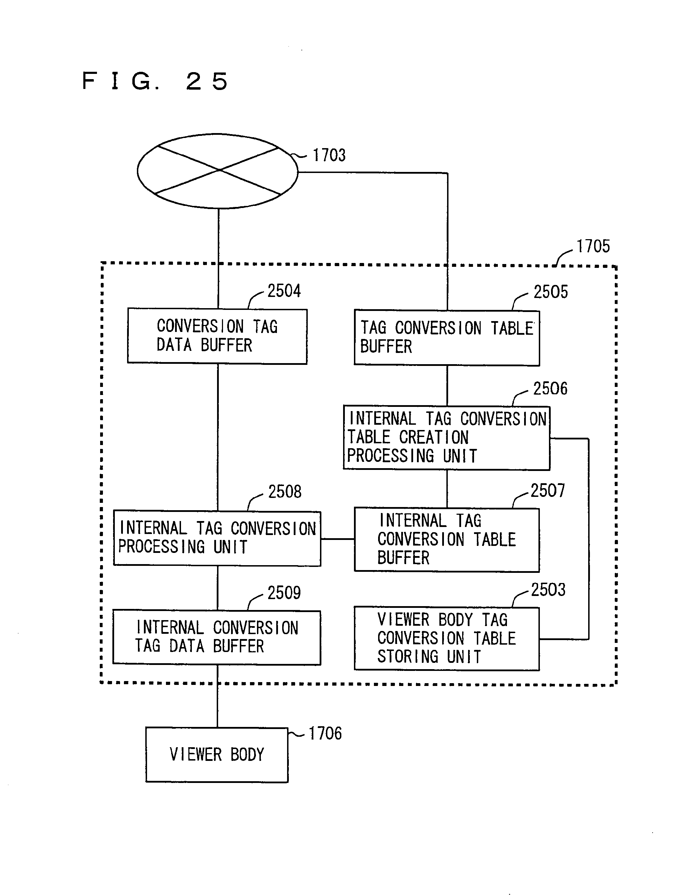

An exemplary configuration of internal converter 1705 included in viewer 1704 shown in Fig. 17 will now be shown in Fig. 25. It is noted that viewer body 1706 and display device 1707 included in viewer 1704 may be equivalent to viewer body 0105 and display device 0106, respectively, in the first embodiment.

Referring to Fig. 25, internal converter 1705 receives conversion tag data and a tag conversion table from converter 1702 through network 1703 and outputs internal conversion tag data to viewer body 1706.

Internal converter 1705 is configured to include a conversion tag data buffer 2504 storing the received conversion tag data, a tag conversion table buffer 2505 storing the received tag conversion table, an internal tag conversion table creation processing unit 2506 creating an internal tag conversion table, an internal tag conversion table buffer 2507 storing an internal tag conversion table, an internal tag conversion processing unit 2508 creating internal tag conversion data, an internal conversion tag data buffer 2509 storing internal conversion tag data, and a viewer body tag conversion table storing unit 2503 storing a tag conversion table (a tag conversion table assumed by viewer body 1706) for converting description tag data into tag data interpretable at viewer body 1706, in association with viewer body 1706.

Conversion tag data buffer 2504, tag conversion table buffer 2505, internal tag conversion table buffer 2507, internal conversion tag data buffer 2509, and viewer body tag conversion table storing unit 2503 are realized by an RAM such as a flash memory or a hard disk.

Internal tag conversion table creation processing unit 2506 and internal tag conversion processing unit 2508 are realized, for example, by circuits independent of each other. Alternatively, they may be realized, for example, by a virtual circuit realized by an operation processing circuit of a computer or the like.

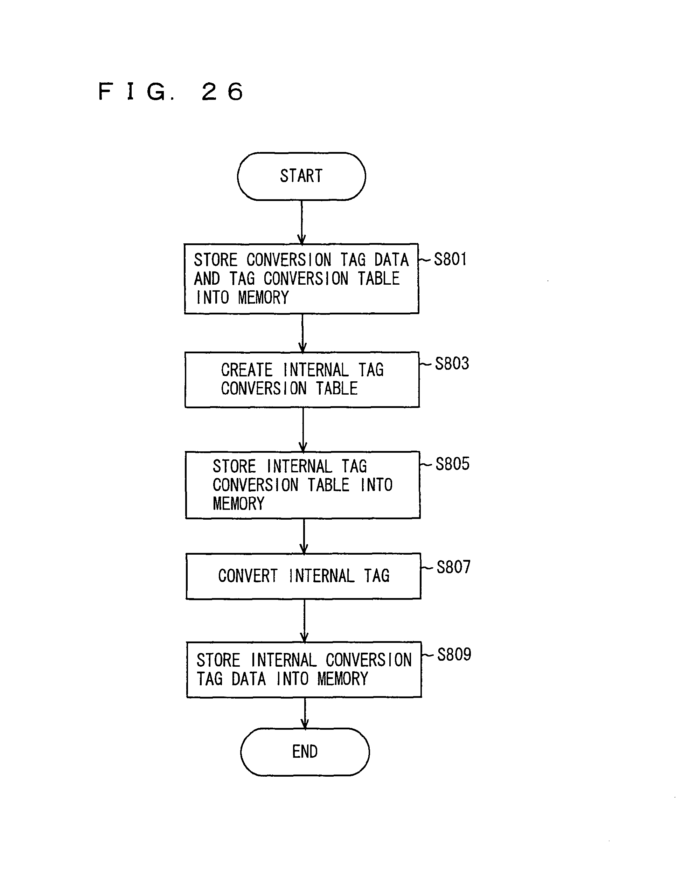

The flow of the process in internal converter 1705 will now be described using the flowchart of Fig. 26. The process shown in the flowchart of Fig. 26 is realized by a CPU (not shown) included in internal converter 1705 which reads and executes a program stored in a storage device (not shown) such as an ROM to cause each unit shown in Fig. 25 to function.

Referring to fig. 26, internal converter 1705 first stores the conversion tag data received from converter 1702 through network 1703 and the tag conversion table into conversion tag data buffer 2504 and tag conversion table buffer 2505, respectively (S801).

Then, at internal tag conversion table creation processing unit 2506, an internal tag conversion table is created which is necessary to convert the conversion tag data stored in conversion tag data buffer 2504 to internal conversion tag data (S803).

Here, assuming that viewer body 1706 is equivalent to viewer body 0105 in the first embodiment, the data that can be interpreted at viewer body 1706 is conversion data obtained by converting description tag data using the tag conversion table as shown in Fig. 6 (this conversion table will be referred to as a tag conversion table for viewer hereinafter). The conversion tag data received by the present viewer 1704 is, however, such tag data that results from the conversion using the tag conversion table (referred to as a reception tag conversion table hereinafter) created dynamically for the description tag data at converter 1702 based on the tag-related information count data as shown in Fig. 22. Therefore, the format cannot be interpreted by viewer body 1706 as it is. Then, at step S803, internal converter 1705 creates an internal tag conversion table needed to further convert the received conversion tag data converted using the tag conversion table into internal conversion tag data. It is noted that the internal conversion tag data is equivalent to that which is formed by converting the original description tag data using the tag conversion table for viewer. It is noted that such a tag conversion table for viewer is stored in viewer body tag conversion table storing unit 2503 in association with viewer body 1706. Alternatively, it may be obtained from viewer body 1706 as necessary.

Then, at step S803, an internal tag conversion table is created based on the conversion table for viewer stored in viewer body tag conversion table storing unit 2503 and the reception conversion table received from converter 1702.

A specific method of creating an internal tag conversion table at step S803 is as follows if the tag conversion table for viewer is as shown in Fig. 6 and the reception tag conversion table is as shown in Fig. 22.

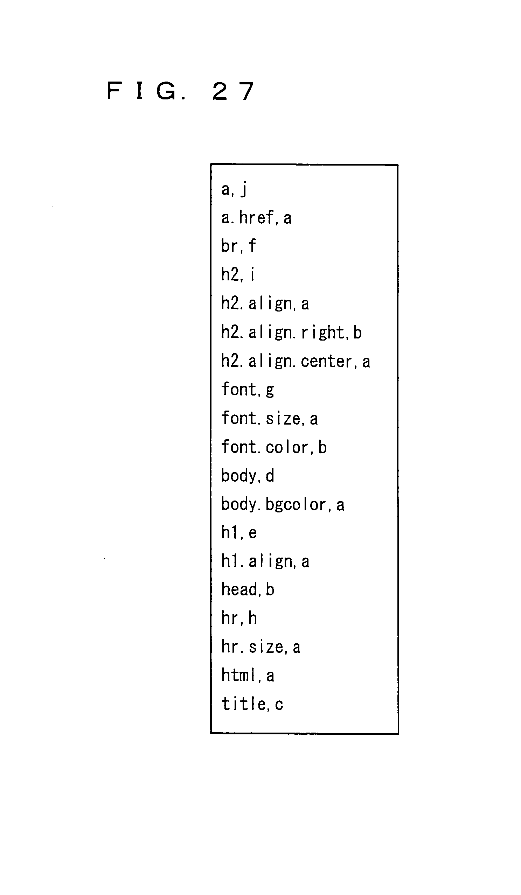

More specifically, a character string representing a tag name and an attribute name after conversion as shown on the left side of a comma in the tag conversion table for viewer shown in Fig. 6 is substituted with a character string representing a tag name and an attribute name before conversion. A specific example of this substituted tag conversion table for viewer is shown in Fig. 27.

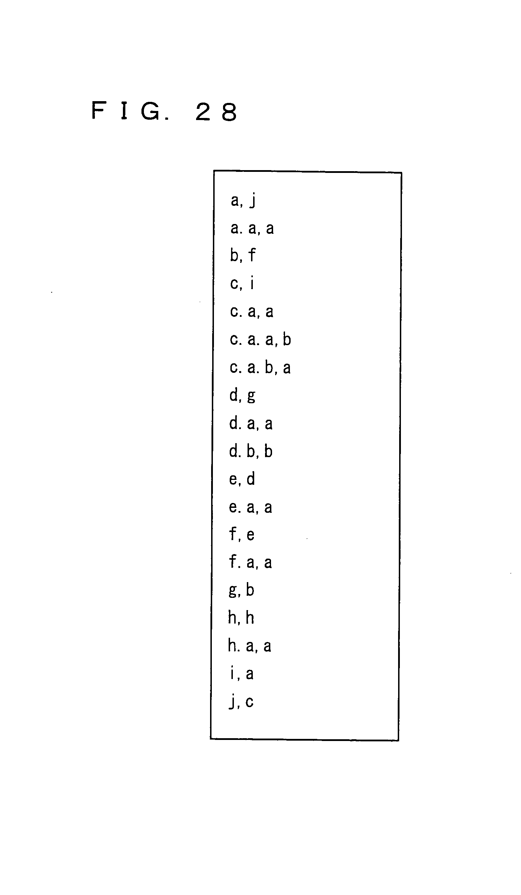

Then, a character string representing a tag name, an attribute name, and an attribute value shown on the left side of a comma in the substituted tag conversion table for viewer shown in Fig. 27 is converted using the reception tag conversion table shown in Fig. 22, whereby an internal tag conversion table shown in Fig. 28 is generated.

Then, the internal tag conversion table created at step S803 is stored in internal tag conversion table buffer 2507 (S805).

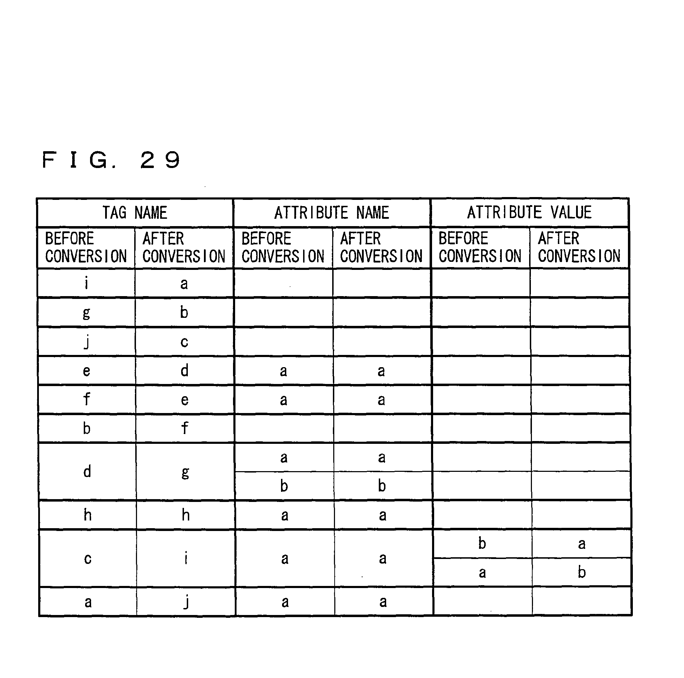

Then, at internal tag conversion processing unit 2508, the conversion tag data stored in conversion tag data buffer 2504 is converted using the internal tag conversion table stored in internal tag conversion table buffer 2507 (S807). At step S807, when the conversion tag data is as shown in Fig. 23 and the internal tag conversion table is as shown in Fig. 28, the conversion rule is as shown in Fig. 29. The internal conversion tag data that is a conversion result obtained by following this conversion rule to convert the conversion tag data shown in Fig. 23 is tag data shown in Fig. 7.

Then, the conversion result is stored in internal conversion tag data buffer 2509 as internal conversion tag data (S809), and this process will end.

Internal converter 1705 transfers the internal conversion tag data obtained in this way to viewer body 1706, whereby a process similar to the process described in the first embodiment is performed for interpretation in viewer body 1706.

Internal converter 1705 included in viewer 1704 performs the aforementioned process so that, even if the conversion format in converter 1702 cannot be interpreted by viewer body 1706, the conversion tag data received from converter 1702 is converted by internal converter 1705 into internal conversion tag data in the format that can be interpreted by viewer body 1706 thereby enabling a display on display device 1707.

Alternatively, the data conversion method performed by the aforementioned converter and the data display method performed by the viewer may also be provided as a program. Such a program may be recorded on a computer-readable recording medium such as a flexible disk, a CD-ROM, an ROM, an RAM, and a memory card attached to a computer and provided as a program product. Alternatively, the program may be provided as being recorded on a recording medium such as a hard disk contained in a computer. Alternatively, the program may be provided as being downloaded through a network.

The provided program product is installed in a program storing unit of a hard disk or the like for execution. It is noted that the program product includes a program itself and a recording medium having a program recorded thereon.

It is noted that the embodiments disclosed herein should be taken by way of illustration rather than by way of limitation in all aspects. The scope of the present invention is shown by the claims rather than by the description above, and it is intended that all the equivalents to the claims and the modifications within the claims should be embraced.

### Industrial Applicability

Since the present invention allows a markup language to be processed optimally as described above, it is advantageously applicable to a data conversion method, a data display method, a data conversion device, and a data display device in which a markup language is optimally processed while both a reduced amount of data and a decreased amount of processing required for data access are realized at the same time.

## Claims

1. A data conversion method comprising:
an extraction step (S203, S209) of extracting, from first data described in a markup language, at least one character string of a character string representing a tag name, a character string representing an attribute name, and a character string representing an attribute value included in said first data; and
a generation step (S205, S211, S213) of generating second data by converting a character string extracted from said first data into other character string having an amount of data smaller than that of the extracted character string at said extraction step.

2. The data conversion method according to claim 1, wherein, at said generation step, when said extracted character string and other extracted character string can be identified based on their arrangement in a tag, said extracted character string and said other extracted character string are converted into identical said other character string.

3. The data conversion method according to claim 1 further comprising a decision step (S205, S211, S213) of deciding said other character string to be used during conversion at said generation step for at least one character string of a character string representing a tag name, a character string representing an attribute, and a character string representing an attribute value included in said first data, based on frequency of appearance in said first data.

4. The data conversion method according to claim 1 further comprising:
a determination step (S307) of determining whether said generated second data satisfies a prescribed condition; and
an output step (S317) of outputting a message according to a result of the determination at said determination step,
wherein said output message refers to content of said first data therein.

5. A data display method comprising:
an obtaining step (S501) of obtaining second data generated by converting at least one character string of a character string representing a tag name, a character string representing an attribute name, and a character string representing an attribute value included in first data described in a markup language, into other character string; and
an analysis step (S503) of performing an analysis for displaying said first data by executing an analysis process corresponding to said converted other character string included in said second data.

6. The data display method according to claim 5, wherein
at said obtaining step, information indicative of a correspondence between said other character string and at least one character string of a character string representing a tag name, a character string representing an attribute name, and a character string representing an attribute value included in said first data is obtained together with said second data, and
at said analysis step, said analysis for displaying said first data is performed by executing an analysis process corresponding to said other character string based on obtained said information indicative of a correspondence.

7. A data conversion device comprising:
an extraction unit (0405) extracting, from first data described in a markup language, at least one character string of a character string representing a tag name, a character string representing an attribute name, and a character string representing an attribute value included in said first data; and
a generation unit (0405) generating second data by converting a character string extracted from said first data into other character string having an amount of data smaller than that of the extracted character string by said extraction unit.

8. The data conversion device according to claim 7, wherein, when said extracted character string and other extracted character string can be identified based on their arrangement in a tag, said generation unit converts said extracted character string and said other extracted character string into identical said other character string.

9. The data conversion device according to claim 7 further comprising a decision unit (0405) deciding said other character string to be used during conversion by said generation means for at least one character string of a character string representing a tag name, a character string representing an attribute, and a character string representing an attribute value included in said first data, based on frequency of appearance in said first data.

10. The data conversion device according to claim 7 further comprising:
a determination unit (0808) determining whether said generated second data satisfies a prescribed condition; and
an output unit (0803) outputting a message according to a result of the determination of said determination unit, wherein
said output message refers to content of said first data therein.

11. A data display device comprising:
an obtaining unit (1404) obtaining second data generated by converting at least one character string of a character string representing a tag name, a character string representing an attribute name, and a character string representing an attribute value included in first data described in a markup language, into other character string; and
an analysis unit (1405) performing an analysis for displaying said first data by executing an analysis process corresponding to said converted other character string included in said second data.

12. The data display device according to claim 11, wherein
said obtaining unit obtains, together with said second data, information indicative of a correspondence between said other character string and at least one character string of a character string representing a tag name, a character string representing an attribute name, and a character string representing an attribute value included in said first data, and
said analysis unit performs said analysis for displaying said first data by executing an analysis process corresponding to said other character string based on obtained said information indicative of a correspondence.
